# EUROPEAN PATENT APPLICATION

(11) **EP 2 352 048 A2**
(43) Date of publication of application: **03.08.2011**
(21) Application number: 11250100.2
(22) Date of filing: 28.01.2011
(51) Int. Cl.: G02B 6/38, G02B 6/04

(54) **Multiplexing device for image display and retinal scanning display provided with multiplexing device**

(30) Priority: 30.01.2010 JP 2010019825
(71) Applicant: Brother Kogyo Kabushiki Kaisha, Nagoya-shi, Aichi-ken 467-8561 (JP)
(72) Inventor: Kuriki, Yuichiro, Nagoya-shi, Aichi-ken 467-8561 (JP); Tanaka, Mitsugi, Nagoya-shi, Aichi-ken 467-8561 (JP)
(74) Representative: Smith, Samuel Leonard

(57) **Abstract**

A multiplexing device for an image display includes: a light source part which has light source modules which irradiate laser beams having different wavelengths; a multiplexing part which multiplexes laser beams irradiated from the respective light source modules; optical fiber parts, each optical fiber part including a light-source-side optical fiber which has one end portion thereof connected to the light source module and a multiplexing-side optical fiber which has one end portion thereof connected to the multiplexing part; and a plurality of connecting parts, each connecting part connecting the light-source-side optical fiber and the multiplexing-side optical fiber with each other. The connecting part can change a distance between the other end portion of the light-source-side optical fiber and the other end portion of the multiplexing-side optical fiber which face with each other.

## Description

### TECHNICAL FIELD

The present invention relates to a multiplexing device for an image display which multiplexes a plurality of lights having different wavelengths in order to perform an image display and a retinal scanning display provided with the multiplexing device.

For example, among image display devices such as a retinal scanning display, there has been known an image display device in which a plurality of lights having different wavelengths are irradiated from a plurality of light sources and are multiplexed and, thereafter, are transmitted to an image display part which irradiates an image light. In the retinal scanning display, in general, visible lights of three colors irradiated from light sources such as semiconductor lasers corresponding to respective colors of R(red), G(green) and B(blue) are multiplexed on one optical axis, and the multiplexed light is transmitted to an image display part as white light. The image display part scans the transmitted light and the scanned light is made to be incident on a pupil of a user of the retinal scanning display and is projected on a retina of the user whereby the user recognizes an image.

In the display device having the above-mentioned constitution where the plurality of lights are multiplexed and the multiplexed light is transmitted to the image display part, there is a case where it is necessary to adjust light quantity (output) of the light incident on the image display part. To be more specific, light which is incident on an eye of a user watching a retinal scanning display is required to satisfy prescribed image brightness and hence, it is necessary to adjust light quantity of light which is incident on the image display part. Further, the image display part is required to display prescribed white and hence, it is necessary to adjust light quantities of lights of respective colors such that lights of respective colors have a predetermined power ratio.

Such adjustment of light quantity of lights incident on the image display part is conventionally performed by adjusting light quantities in light sources. Accordingly, when the light sources are semiconductor lasers, for example, the light quantity of light incident on the image display part is adjusted by adjusting electric current quantities which flow in the semiconductor lasers.

JP-A-2005-189385 (patent document 1) discloses a technique in which lights from a plurality of light sources are multiplexed, the multiplexed light is irradiated, and light quantities of respective lights to be multiplexed are adjusted. In patent document 1, in an optical waveguide constituted of a plurality of cores on which respective lights are incident and through which the lights propagate and a cladding which covers these cores, light quantities of the respective lights are adjusted to assume a predetermined ratio by setting geometrical shapes of the cores.

According to the technique disclosed in patent document 1, the adjustment of light quantities is performed by positively making use of a loss of light caused by a phenomenon that, based on a geometric shape of the core which constitutes the optical waveguide, light which propagates the core is not reflected on a cladding but is absorbed in the cladding due to the relationship between the refractive index of the core and the cladding.

### SUMMARY OF THE INVENTION

The above-mentioned related art has the following drawbacks. Firstly, when the adjustment of a light quantity of light incident on the image display part is performed by adjusting light quantities of light sources, there may be a case where a contrast of an image is damaged attributed to a characteristic of output change corresponding to the adjustment of light quantities of the light sources.

To be more specific, a semiconductor laser which constitutes one example of a light source, as an output characteristic which is brought about by a change of a drive current value, maintains a certain level of light quantity without making the output become zero even when the drive current value is a threshold current value corresponding to a lower-limit output of a modulation width of the laser. This is brought about by a phenomenon, in case of the semiconductor laser, that even in a state where the drive current value is a threshold current value, a light emitting component of an LED (light emitting diode) is present. Accordingly, when a maximum light quantity which is an upper limit of the modulation width of the laser is lowered to a desired light quantity so as to adjust the light quantity of the light source, a contrast based on a ratio between the upper limit and the lower limit of the modulation width of the laser is remarkably damaged.

Further, an optical attenuator can be used for adjusting a light quantity of a light source. The light attenuator is provided between light sources and a portion where lights from the light sources are multiplexed, for example, so as to attenuate the maximum light quantity from each light source. However, the use of the light attenuator increases a size of the device and pushes up a cost.

Further, according to the technique disclosed in patent document 1 which adjusts light quantities depending on setting of a geometric shape of the core which constitutes the optical waveguide, it is difficult to cope with a case where the further adjustment of light quantity is necessary from a state where light quantities are adjusted temporarily by setting a geometric shape of the core. That is, the technique which adjusts light quantities by setting the geometric shape of the core which constitutes the optical waveguide is not suitable for fine adjustment of light quantities and exhibits poor general-use property.

The present invention has been made under such circumstances, and it is an object of the present invention to provide a multiplexing device for an image display which can adjust light quantities of light from respective light sources without damaging a contrast of an image while suppressing large-sizing and the increase of cost of the image display device, and a retinal scanning display provided with the multiplexing device.

To overcome the above-mentioned drawbacks, according to one aspect of the present invention, there is provided a multiplexing device for an image display which includes: a light source part which has a plurality of light source modules which irradiate optical fluxes having different wavelengths; a multiplexing part which multiplexes the optical fluxes irradiated from the respective light source modules; a plurality of optical fiber parts, each optical fiber part including a first optical fiber which has one end portion thereof connected to the light source module and a second optical fiber which is provided corresponding to the first optical fiber and has one end portion thereof connected to the multiplexing part, the optical fiber parts provided corresponding to the light source modules; and a plurality of connecting parts which are provided corresponding to the optical fiber parts respectively, each connecting part connecting the first optical fiber and the second optical fiber in a state where the other end portion of the first optical fiber and the other end portion of the second optical fiber face each other in an opposed manner, wherein the connecting part is configured to change a distance between the other end portion of the first optical fiber and the other end portion of the second optical fiber which face each other.

In the multiplexing device for an image display having the above-mentioned constitution, the connecting part includes a holding member which holds the other end portion of the first optical fiber and the other end portion of the second optical fiber coaxially and in an axially slidable manner.

In the multiplexing device for an image display having the above-mentioned constitution, the connecting part is constituted of a cylindrical body having an axially-extending split groove, and is configured to hold the other end portion of the first optical fiber and the other end portion of the second optical fiber which are inserted in the cylindrical body respectively in a radially expanded manner due to elastic deformation thereof

In the multiplexing device for an image display having the above-mentioned constitution, the other end portion of the first optical fiber and the other end portion of the second optical fiber are covered with a cylindrical ferrule respectively, and
the connecting part is configured to connect the other end portion of the first optical fiber and the other end portion of the second optical fiber by way of the cylindrical ferrule.

In the multiplexing device for an image display having the above-mentioned constitution, the ferrule is formed into a circular cylindrical shape.

In the multiplexing device for an image display having the above-mentioned constitution, an end surface of the other end portion of the first optical fiber and an end surface of the other end portion of the second optical fiber have a spherical shape respectively.

In the multiplexing device for an image display having the above-mentioned constitution, the optical fiber part is constituted of a single-mode optical fiber which transmits the optical flux incident thereon from the light source module in a single mode, and the first optical fiber has at least a sufficient length for eliminating a multimode component from the optical flux incident from the light source module therethrough by allowing the optical flux incident from the light source module to pass through the first optical fiber.

In the multiplexing device for an image display having the above-mentioned constitution, the connecting part includes a first member which is detachably mounted on the other end portion of the first optical fiber and a second member which is detachably mounted on the other end portion of the second optical fiber, and the first member and the second member are detachably connected to each other.

In the multiplexing device for an image display having the above-mentioned constitution, the connecting part is configured to fix the other end portion of the first optical fiber and the other end portion of the second optical fiber after the adjustment of the distance between the other end portion of the first optical fiber and the other end portion of the second optical fiber.

According to another aspect of the present invention, there is provided a retinal scanning display which comprises one of the above-mentioned multiplexing devices for an image display, and is configured to project an image on a retina of a viewer by scanning an optical flux irradiated from the multiplexing part in two dimensional directions and by projecting the scanned optical flux on the retina of an eye of the viewer.

According to the present invention, it is possible to adjust light quantities of lights from the respective light sources without damaging a contrast of an image while suppressing the large-sizing of the device and the pushing up of cost.

### BRIEF DESCRIPTION OF DRAWINGS

Fig. 1 is a view showing the constitution of a retinal scanning display according to one embodiment of the present invention;
Fig. 2 is a view showing the constitution of a connecting part provided to a multiplexing device for an image display according to one embodiment of the present invention;
Fig. 3 is a view showing one example of a graph expressing the relationship between an inter-end-surface distance of an optical fiber and coupling efficiency;
Fig. 4 is a perspective view showing the constitution of a connecting-side end portion of the optical fiber according to one embodiment of the present invention;
Fig. 5 is a side view showing the constitution of a connecting-side end portion of the optical fiber according to one embodiment of the present invention;
Fig. 6 is a view as viewed in the direction indicated by an arrow A in Fig. 5;
Fig. 7 is a perspective view showing one example of a holding member according to one embodiment of the present invention;
Fig. 8 is a view as viewed in the direction indicated by an arrow B in Fig. 7;
Fig. 9 is a perspective view showing another example of the holding member according to one embodiment of the present invention;
Fig. 10 is a view as viewed in the direction indicated by an arrow C in Fig. 9;
Fig. 11 is an enlarged view of a portion D in Fig. 5;
Fig. 12 is a perspective view showing one example of a method of adjusting the inter-end-surface distance of the optical fiber according to one embodiment of the present invention;
Fig. 13 is a side view showing one example of a method of adjusting the inter-end-surface distance of the optical fiber according to one embodiment of the present invention;
Fig. 14 is a cross-sectional view taken along a line E-E in Fig. 13;
Fig. 15 is a perspective view showing the constitution of the connecting part according to one embodiment of the present invention;
Fig. 16A and Fig. 16B are a perspective view and a cross-sectional view showing the constitution of a first member which constitutes the connecting part according to one embodiment of the present invention;
Fig. 17 is a perspective view showing the constitution of a second member which constitutes the connecting part according to one embodiment of the present invention;
Fig. 18 is a plan view showing the constitution of the second member which constitutes the connecting part according to one embodiment of the present invention;
Fig. 19 is a view as viewed in the direction indicated by an arrow F in Fig. 18;
Fig. 20 is a cross-sectional view taken along a line G-G in Fig. 19;
Fig. 21 is a perspective view showing a method of adjusting the inter-end-surface distance of the optical fiber by the connecting part according to one embodiment of the present invention;
Fig. 22 is a perspective view showing a connection state of the connecting part according to one embodiment of the present invention;
Fig. 23 is a plan view showing a connection state of the connecting part according to one embodiment of the present invention;
Fig. 24 is a view as viewed in the direction indicated by an arrow H in Fig. 23;
Fig. 25 is a cross-sectional view taken along a line J-J in Fig. 24;
Fig. 26 is an explanatory view for explaining a contrast of an image according to the present invention; and
Fig. 27 is an explanatory view for explaining a conventional contrast of an image.

### BEST MODE FOR CARRYING OUT THE INVENTION

The present invention is directed to a multiplexing device for an image display and a retinal scanning display provided with the multiplexing device, wherein at a middle portion of each one of optical fibers which transmit light from respective light sources which irradiate lights to be multiplexed, a portion where the optical fibers in a cut state are connected to each other is provided, and a light quantity of light from each light source is adjusted by adjusting an inter-end-surface distance between the cut optical fibers to be connected at the portion.

An embodiment of the present invention is explained hereinafter.

In the embodiment explained hereinafter, the explanation is made with respect to a case where a multiplexing device for an image display according to the present invention (hereinafter simply referred to as "multiplexing device") is applied to a retinal scanning display (hereinafter referred to as "RSD") which constitutes a retinal scanning image display device.

### [Schematic constitution of multiplexing device]

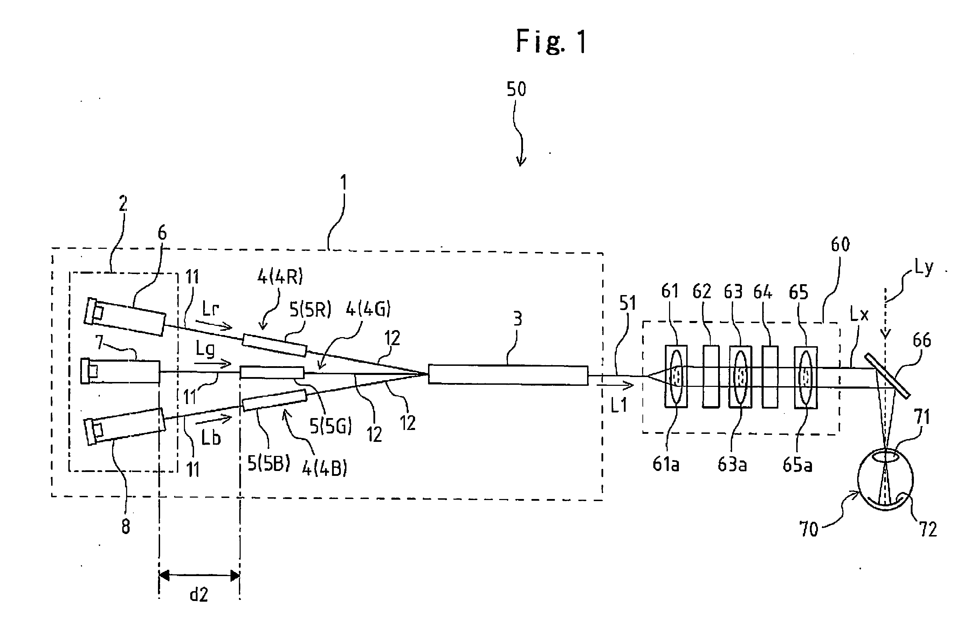

Firstly, the schematic constitution of the multiplexing device I according to this embodiment is explained in conjunction with Fig. 1. As shown in Fig. 1, the multiplexing device 1 includes a light source part 2, a multiplexing part 3 and optical fiber parts 4, and constitutes a part of the RSD 50 according to this embodiment. In the multiplexing device 1, laser beams which are three optical fluxes having different wavelengths and are irradiated by the light source part 2 are transmitted to the multiplexing part 3 by the optical fiber part 4 and are multiplexed by the multiplexing part 3. Light obtained by multiplexing in the multiplexing part 3 is transmitted to an image display part 60 which constitutes a part of the RSD 50 through a transmission cable 51 formed of an optical fiber or the like (see an arrow L1).

The light source part 2 includes, as a plurality of light source modules which irradiate laser beams having different wavelengths, a red light source module 6 which generates a red laser beam, a green light source module 7 which generates a green laser beam, and a blue light source module 8 which generates a blue laser beam. The light source part 2 reads image information in accordance with every pixel from image signals supplied from the outside by the light source modules 6, 7, 8 of respective colors, and generates and irradiates laser beams of R(red), G(green) and B(blue) (see arrows Lr, Lg, Lb) based on the image information which is read in accordance with every pixel. The light source modules 6, 7, 8 of respective colors are formed of a semiconductor laser, and each semiconductor laser generates a laser beam of color corresponding to the color of the light source module.

The laser beams of respective colors which are irradiated from the respective light source modules 6, 7, 8 of respective colors are transmitted to the multiplexing part 3 via the optical fiber parts 4 which are provided corresponding to the light source modules 6, 7, 8 respectively. Accordingly, the multiplexing device 1 includes, as the optical fiber parts 4, the red optical fiber part 4R, the green optical fiber part 4G and the blue optical fiber part 4B.

The red optical fiber part 4R has one end thereof connected to the red light source module 6 and the other end thereof connected to the multiplexing part 3 so that a red laser beam irradiated from the red light source module 6 is transmitted to the multiplexing part 3 and is incident on the multiplexing part 3. The green optical fiber part 4G has one end thereof connected to the green light source module 7 and the other end thereof connected to the multiplexing part 3 so that a green laser beam irradiated from the green light source module 7 is transmitted to the multiplexing part 3 and is incident on the multiplexing part 3. Further, the blue optical fiber part 4B has one end thereof connected to the blue light source module 8 and the other end thereof connected to the multiplexing part 3 so that a blue laser beam irradiated from the blue light source module 8 is transmitted to the multiplexing part 3 and is incident on the multiplexing part 3.

The multiplexing part 3 multiplexes the laser beams of three colors consisting of red, green and blue irradiated from the light source modules 6, 7, 8 of respective colors. The multiplexing part 3 multiplexes the laser beams of three colors consisting of red, green and blue on one optical axis, and irradiates the multiplexed light as a white light to a transmission cable 51.

The multiplexing part 3 has the following constitution, for example. The multiplexing part 3 is formed of an optical waveguide which includes a core portion formed into a passage through which light propagates, and a cladding portion which covers the core portion. The core portion has three branched portions on which laser beams of respective colors are incident and through which the laser beams propagate, and a merging portion where three branched portions are merged to each other. The core portion and the cladding portion are made of, for example, a polymer material such as polymer resin, quartz glass, plastic or the like. Further, the core portion and the cladding portion are formed such that a refractive index of the core portion becomes higher than a refractive index of the cladding portion.

On the multiplexing part 3 having such a constitution, from an end portion of the core portion on a side opposite to a side where the respective branched portions are merged to each other, laser beams of respective colors are incident by way of the optical fiber parts 4 corresponding to the respective colors. Then, the laser beams of respective colors incident on the respective branched portions of the core portion are multiplexed to each other at a merged portion, and a multiplexed light is irradiated from an end portion of the merged portion of the core portion on a side opposite to the branched side as a spot-shaped white light. The white light irradiated from the multiplexing part 3 is incident on the transmission cable 51 and is transmitted to an image display part 60 via the transmission cable 51.

Provided that the multiplexing part 3 can multiplex laser beams of three colors irradiated from the light source modules 6, 7, 8 of respective colors, the constitution of the multiplexing part 3 is not limited. The multiplexing part 3 may include, for example, a collimator lens which collimates laser beams incident on the collimator from the optical fiber parts 4 of respective colors, a dichroic mirror which synthesizes laser beams of respective colors by allowing the transmission or reflection of the laser beams by making use of wavelength selection property or an optical system such as lenses which converge synthesized laser beams.

### [Constitution of RSD]

As shown in Fig. 1, the RSD 50 of this embodiment includes the multiplexing device 1 and the image display part 60. In the RSD 50, a white light transmitted from the multiplexing part 3 of the multiplexing device 1 via the transmission cable 51 is scanned by the image display part 60, is incident through a pupil 71 of an eye 70 of a user of the RSD 50 (hereinafter referred to as "viewer") and is projected on a retina 72 so that the viewer can recognize an image.

The image display part 60 includes, to bring laser beams incident through the transmission cable 51 into a state where the laser beams can be projected on the retina 72 of the viewer, an optical scanning device for scanning the laser beams in the horizontal direction and in the vertical direction and an optical system. To be more specific, the image display part 60 includes a collimation optical system 61, a horizontal scanning part 62, a first relay optical system 63, a vertical scanning part 64 and a second relay optical system 65.

The collimation optical system 61 collimates the laser beams incident from the multiplexing part 3 via the transmission cable 51 using a lens 61a and the like. The horizontal scanning part 62 scans the laser beams which are collimated by the collimation optical system 61 in the horizontal direction in a reciprocating manner for an image display. The horizontal scanning part 62, for example, includes a deflecting element having a deflection plane for scanning the laser beams in the horizontal direction and a drive circuit which generates a drive signal for swinging the deflection plane of the deflecting element. The first relay optical system 63 is arranged between the horizontal scanning part 62 and the vertical scanning part 64 and relays the laser beams between these scanning parts 62, 64.

The vertical scanning part 64 scans the laser beams scanned in the horizontal direction by the horizontal scanning part 62 in the vertical direction. The vertical scanning part 64, for example, includes a deflecting element having a deflection plane for scanning the laser beams in the vertical direction and a drive circuit which generates a drive signal for swinging the deflection plane of the deflecting element. The vertical scanning part 64, for every 1 frame of an image to be displayed, scans the laser beams for forming an image in the vertical direction from the first horizontal scanning line towards the last horizontal scanning line. Due to such an operation, a two-dimensionally-scanned image is formed. Here, "horizontal scanning line" means one scanning in the horizontal direction by the horizontal scanning part 62. In this manner, the RSD 50 includes, in the image display part 60, the horizontal scanning part 62 and the vertical scanning part 64 as scanning parts which two-dimensionally scan laser beams irradiated from the multiplexing part 3 and are incident via the transmission cable 51.

The first relay optical system 63, using a lens 63a or the like, converges the laser beams scanned in the horizontal direction by the deflection plane of the deflecting element of the horizontal scanning part 62 on the deflection plane of the deflecting element of the vertical scanning part 64. The laser beams converged on the deflection plane of the vertical scanning part 64 are scanned in the vertical direction by the deflection plane of the vertical scanning part 64.

The second relay optical system 65, using a lens 65 or the like, converts the laser beams scanned in the horizontal direction as well as in the vertical direction by the horizontal scanning part 62 and the vertical scanning part 64 respectively so that the laser beams are converged on the pupil 71 of the viewer. That is, the laser beams scanned in the vertical direction by the deflection plane of the vertical scanning part 64 is irradiated as image light Lx from the image display part 60 via the second relay optical system 65.

The image light Lx irradiated from the image display part 60 is reflected on a half mirror 66 provided to the RSD 50 and is incident on the pupil 71 of the viewer. The image light Lx from the image display part 60 is incident on the pupil 71 whereby a display image corresponding to the image signal is projected on the retina 72. Accordingly, the image light Lx is recognized as the display image by the viewer. In this manner, the constitution including the second relay optical system 65 and the half mirror 66 functions as a projection part which projects the laser beam scanned by the horizontal scanning part 62 and the vertical scanning part 64 on the retina 72 of the eye 70 of the viewer thus projecting the image.

Further, an external light Ly passes through the half mirror 66 and is incident onto the eye 70 of the viewer. Accordingly, the viewer can visually recognize an image which is formed by superposing the image generated by the image light Lx to scenery recognized using the external light Ly In this manner, the RSD 50 of this embodiment is a see-through-type display which projects the image light Lx irradiated from the image display part 60 onto the eye 70 of the viewer while scanning and, at the same time, allows the external light to pass therethrough. Here, the RSD 50 according to this embodiment is not necessarily a see-through-type display.

Further, the RSD 50 includes a control part which controls respective parts of the RSD 50. The control part has the following constitution, for example. The control part controls the RSD 50 by executing the predetermined processing in accordance with a control program which is preliminarily stored. The control part includes respective function parts such as a CPU, a flash memory, a RAM, a VRAM, a plurality of input output interfaces which are connected using a bus for data communication and performs transmission/reception of various information via the bus. The control part supplies the formed image signal to the light source part 2.

As has been described above, the RSD 50 of this embodiment includes the multiplexing device 1, scans the laser beams irradiated from the multiplexing part 3 in the two dimensional directions, and forms the image on the retina 72 of the eye 70 of the viewer by projecting the scanned laser beams on the retina 72 of the eye 70 of the viewer. The RSD 50 constitutes, for example, a head mounted display to be mounted on a head portion of the viewer by including an eyeglasses-type frame which supports the constitution including the multiplexing device 1 and the image display part 60. Hereinafter, the constitution of the multiplexing device 1 is explained specifically

### [First embodiment of multiplexing device]

In the multiplexing device, at a middle portion of each one of the optical fiber parts 4R, 4G, 4B which transmit laser beams irradiated from the respective light source modules 6, 7, 8 of the light source part 2, a portion where optical fibers in a cut state are connected to each other is provided, and a light quantity of light from each light source module 6, 7, 8 is adjusted by adjusting a distance between end surfaces of the optical fibers which are connected to each other at the portion. Accordingly, the three optical fiber parts 4R, 4G, 4B which are mounted on the respective light source modules 6, 7, 8 corresponding to the light source modules 6, 7, 8 as described above respectively include the light source side optical fiber 11 which constitutes the first optical fiber and has one end portion thereof connected to the light source modules 6, 7, 8 and the multiplexing side optical fiber 12 which is provided corresponding to the light source side optical fiber 11, constitutes the second optical fiber and has one end portion thereof connected to the multiplexing part 3.

The multiplexing device 1 includes three connecting parts 5 which connect light-source-side optical fibers 11 and the multiplexing-side optical fibers 12 of the respective optical fiber parts 4R, 4G, 4B to each other. That is, the multiplexing device 1 includes, as the connecting parts 5, a red connecting part 5R mounted on the red optical fiber part 4R, a green connecting part 5G mounted on the green optical fiber part 4G, and a blue connecting part 5B mounted on the blue optical fiber part 4B.

In this manner, the connecting parts 5 are provided corresponding to the respective optical fiber parts 4R, 4G, 4B respectively, and the light-source-side optical fibers 11 and the multiplexing-side optical fibers 12 are connected to each other in a state where the other end portions of the light-source-side optical fibers 11 and the other end portions of the multiplexing-side optical fibers 12 are arranged to face each other in an opposed manner. In the explanation made hereinafter, with respect to the light-source-side optical fibers 11 and the multiplexing-side optical fibers 12 which constitute the respective optical fiber parts 4R, 4G, 4B, the other end portions which constitute end portions on a side which are connected by the connecting parts 5 are referred to as "connecting-side end portions".

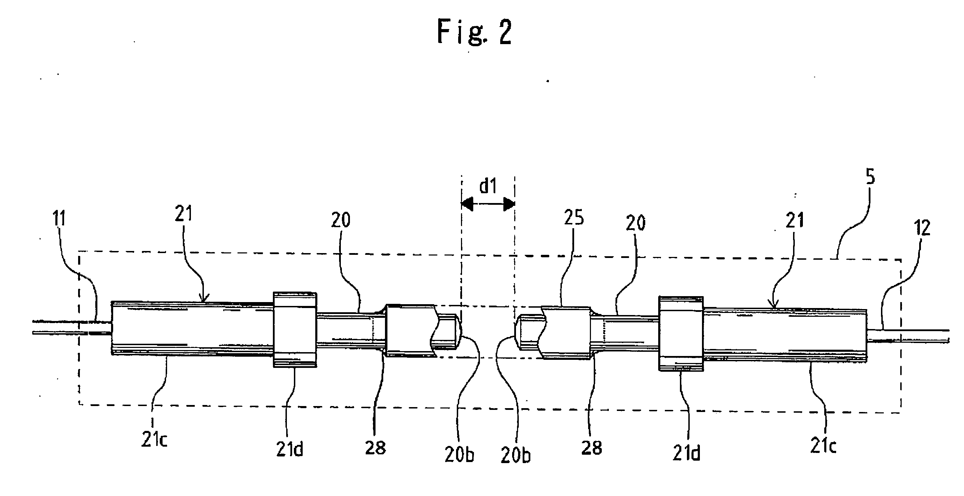

As shown in Fig. 2, the connecting part 5 connects the connecting-side end portion of the light-source-side optical fiber 11 and the connecting-side end portion of the multiplexing-side optical fibers 12 to each other. Further, the connecting part 5 is configured to change a distance (see symbol "d1 between the connecting-side end portion of the light-source-side optical fiber 11 and the connecting-side end portion of the multiplexing-side optical fiber 12 which face each other in an opposed manner. That is, at the connecting part 5, by adjusting the inter-end-surface-distance d1 between the connecting-side end portion of the light-source-side optical fiber 11 and the connecting-side end portion of the multiplexing-side optical fiber 12, it is possible to adjust a light quantity of laser beam of each color transmitted by each optical fiber part 4R, 4G, 4B.

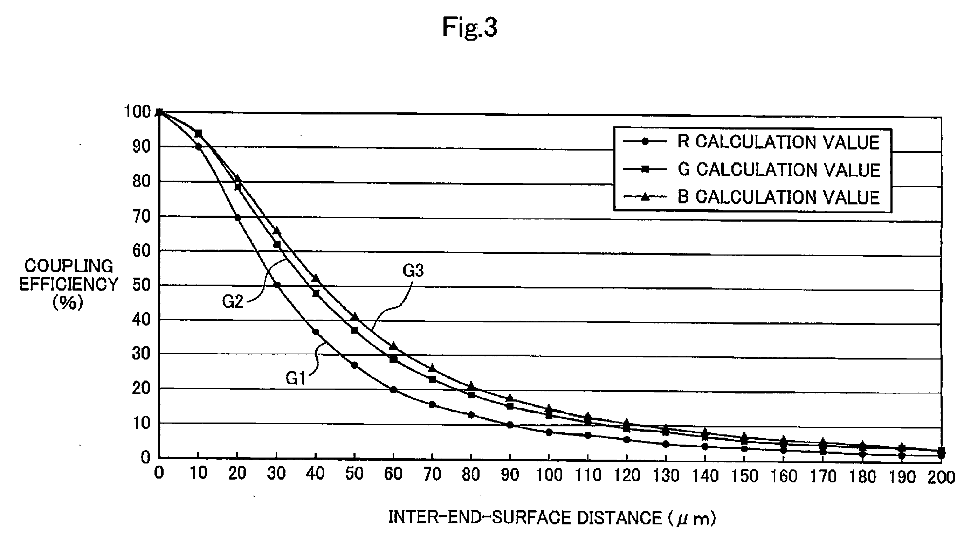

Here, the adjustment of light quantity of laser beam brought about by the adjustment of the inter-end-surface distance d1 is explained in conjunction with a graph shown in Fig. 3. Fig. 3 shows one example of a graph based on calculation values expressing the relationship between an inter-end-surface distance between optical fibers which face each other in an opposed manner (hereinafter simply referred to as "inter-end-surface distance" and coupling efficiency.

In the graph shown in Fig. 3, a value of the inter-end-surface distance (µm) is taken on an axis of abscissas and a value of the coupling efficiency (%) is taken on an axis of ordinates. Here, the coupling efficiency is a rate of the laser beam incident on an end surface of the connecting-side end portion of the multiplexing-side optical fiber 12 out of the laser beam irradiated from the end surface of the connecting-side end portion of the light-source-side optical fiber 11. As the rate of laser beam indicative of the coupling efficiency, a rate of output of the laser beam is used, for example.

In the graph shown in Fig. 3, a graph G1 on which respective calculated values are indicated by circle indicates data on a red laser beam, a graph G2 on which respective calculated values are indicated by square indicates data on a green laser beam, and a graph G3 on which respective calculated values are indicated by triangle indicates data on a blue laser beam. As can be understood from the respective graphs G1, G2, G3 shown in Fig. 3, coupling efficiencies are gradually lowered corresponding to the increase of the inter-end-surface distance with respect to the laser beams of respective colors.

To be more specific, according to data related to this example, with respect to the laser beams of all colors, the coupling efficiency is gradually lowered from a state where the coupling efficiency is 100% at the inter-end-surface distance of 0µm to a state where the coupling efficiency is approximately 10% at the inter-end-surface distance of 100µm. Then, the coupling efficiency is gently decreased to a state where the coupling efficiency is approximately several % at the inter-end-surface distance of 200µm. All of graphs G1, G2, G3 indicating laser beams of respective colors draw the substantially equal curves, while the degree of decrease of the coupling efficiency corresponding to the increase of the inter-end-surface distance is increased in order of blue, green and red.

In this manner, with respect to the laser beams of all colors, the coupling efficiency is decreased along with the increase of the inter-end-surface distance. Since the coupling efficiency is a rate of the laser beams incident on the multiplexing-side optical fiber 12 from the light-source-side optical fiber 11 as described above, the change of the coupling efficiency directly brings about the change of light quantity of the laser beam. Based on such relationship between the inter-end-surface distance and the coupling efficiency, by adjusting the inter-end-surface distance d1 between the light-source-side optical fiber 11 and the multiplexing-side optical fiber 12, it is possible to adjust light quantities of laser beams of respective colors irradiated from the light source modules 6, 7, 8 of respective colors.

The constitution of connecting-side end portions of the light-source-side optical fiber 11 and the multiplexing-side optical fiber 12 which are connected with each other by the connection portion 5 is explained in conjunction with Fig. 2 and Fig. 4 to Fig. 6. Since the connecting-side end potions of the light-source-side optical fiber 11 and the multiplexing-side optical fiber 12 have the substantially same constitution and hence, the connecting-side end portions of the light-source optical fiber 11 and the multiplexing-side optical fiber 12 are explained as "connecting-side end portions of the optical fiber" using the same symbols.

As shown in Fig. 2 and Fig. 4 to Fig. 6, each connecting-side end portion of the optical fiber is covered with a cylindrical ferrule 20. The ferrule 20 is formed into a circular cylindrical shape, and enlarges a diameter of the connecting-side end portion of the optical fiber. The ferrule 20 is made of zirconia. The ferrule 20 which covers the connecting-side end portion of the light-source-side optical fiber 11 and the ferrule 20 which covers the connecting-side end portion of the multiplexing-side optical fiber 12 have the same outer diameter.

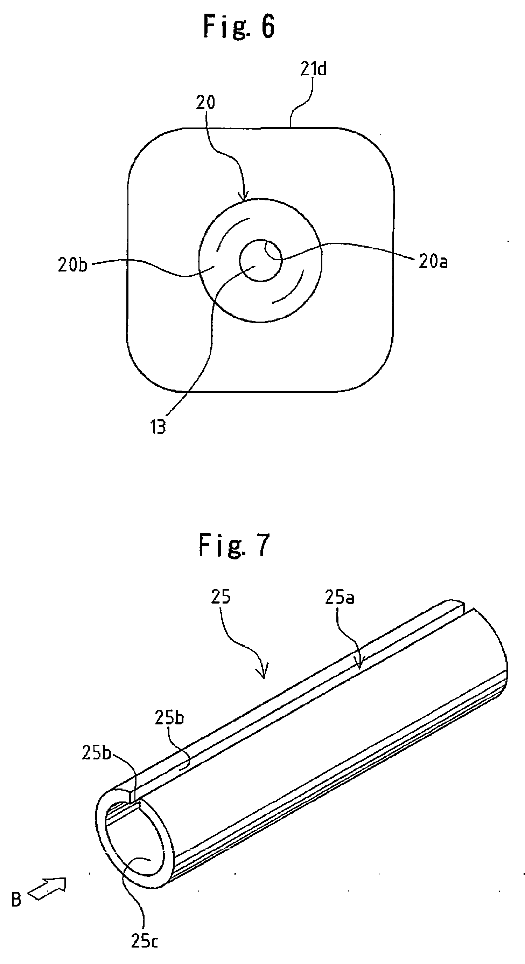

The connecting-side end portion of the optical fiber is allowed to pass through an axis portion of the cylindrical ferrule 20. That is, the cylindrical ferrule 20 is formed such that an axis of the ferrule 20 and an axis of the connecting-side end portion of the optical fiber having a circular cross-section agree with each other (see Fig. 6). Accordingly, the ferrule 20 has a hole portion 20a which agrees with an outer diameter of the connecting-side end portion of the optical fiber along the axis thereof. The connecting-side end portion of the optical fiber is allowed to pass through the hole portion 20a.

A fiber-end surface 13 which is an end surface of the connecting-side end portion of the optical fiber covered with the ferrule 20 faces a connecting-side end surface 20b of the ferrule 20 by way of the hole portion 20a and has a shape which follows the connecting-side end surface 20b. That is, the fiber end surface 13 and the connecting-side end surface 20b of the ferrule 20 are positioned on a common plane. The ferrule 20 may be made of metal such as stainless steel besides zirconia.

The ferrule 20 has an end portion thereof on a side opposite to a connecting-side supported by a support sleeve 21 in a state where the ferrule 20 covers the connecting-side end portion of the optical fiber. The support sleeve 21 is an approximately circular cylindrical member having an outer diameter larger than an outer diameter of the ferrule 20. In the same manner as the ferrule 20, the support sleeve 21 is provided such that an axis of the support sleeve 21 agrees with the axis of the connecting-side end portion of the optical fiber. Accordingly, the support sleeve 21 has a hole portion 21a which agrees with an outer diameter of the connecting-side end portion of the optical fiber along the axis thereof, and the connecting-side end portion of the optical fiber is allowed to pass through the hole portion 21a.

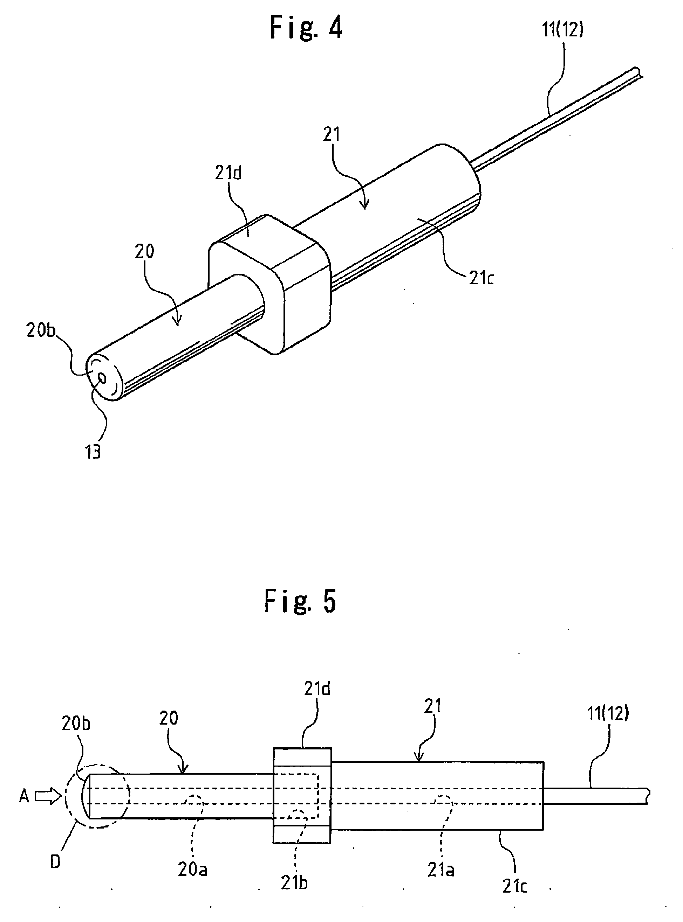

The support sleeve 21 has a support recessed portion 21b on an end portion thereof on a side for supporting the ferrule 20, and an end portion of the ferrule 20 is fitted into the support recessed portion 21b. The support recessed portion 21b is a hole portion which opens at an end surface of the support sleeve 21 and has an inner diameter which agrees with an outer diameter of the ferrule 20. The ferrule 20 is supported by the support sleeve 21 in a state where the end portion on a side opposite to the connecting-side is press-fitted into the support recessed portion 21b of the support sleeve 21 (see Fig. 5).

Further, the support sleeve 21 has a flange portion 21 d which constitutes an enlarged diameter portion with respect to a proximal portion 21c on an end portion thereof on a side where the ferrule 20 is supported. The flange portion 21d has an approximately rectangular shape as viewed in the axial direction of the support sleeve 21 in a state where four corners of the flange portion 21d are chamfered (see Fig. 6). The support recessed portion 21b into which the ferrule 20 is fitted is formed on the flange portion 21d.

In this manner, the connection portion 5 connects the connecting-side end portion of the light-source-side optical fiber 11 and the connecting-side end portion of the multiplexing-side optical fiber 12 by way of the cylindrical ferrule 20.

The connection portion 5 has a split sleeve 25 as a holding member which holds both connecting-side end portions of the optical fibers coaxially and in an axially slidable manner. The split sleeve 25 is a cylindrical body having an axially extending split groove 25a. In this manner, the connection portion 5 is formed of the split sleeve 25 which is the cylindrical body having the axially extending split groove 25a.

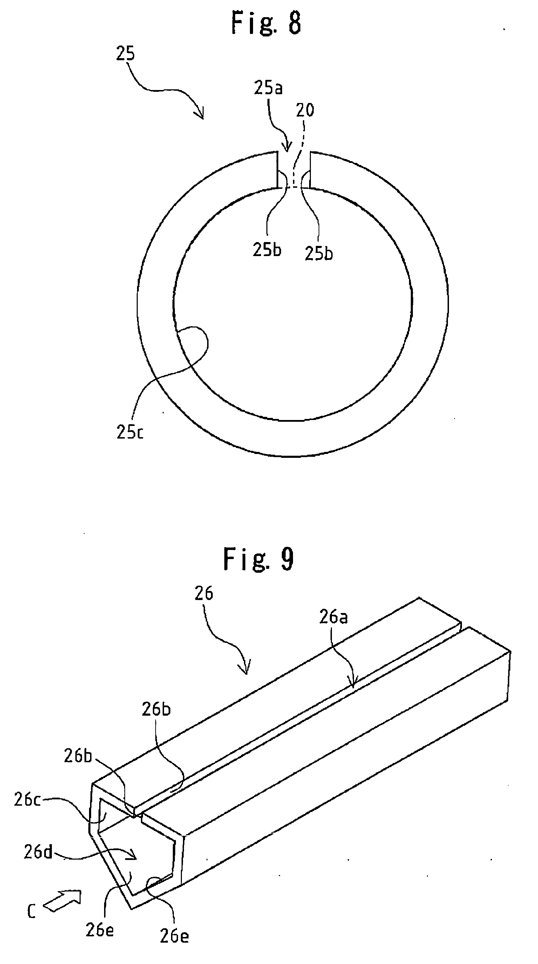

As shown in Fig. 7 and Fig. 8, the split sleeve 25 is an approximately circular cylindrical member and has an inner diameter which agrees with an outer diameter of the ferrule 20. The split sleeve 25, in a state where the ferrule 20 which covers the connecting-side end portions of the respective optical fibers is inserted into the split sleeve 25 from opening portions formed on both ends thereof, holds both connecting-side end portions of the optical fibers coaxially and in an axially slidable manner. The split sleeve 25 has the split groove 25a and hence, exhibits a shape where a portion of the split sleeve 25 in the circumferential direction is cut away as viewed in the axial direction (see Fig. 8). The split groove 25a is a linear cut away portion which is formed on a portion of the split sleeve 25 in the circumferential direction and extends in the axial direction of the split sleeve 25, and is formed of a pair of end surfaces 25b which face each other in an opposed manner.

The split sleeve 25 is made of zirconia in the same manner as the ferrule 20, for example. However, a material for forming the split sleeve 25 is not limited to zirconia and may be metal such as stainless steel, for example.

The split sleeve 25 holds both connecting-side end portions of the optical fibers in a diameter enlarged state due to elastic deformation thereof. Accordingly, an inner diameter of the split sleeve 25 is set slightly smaller than the outer diameter of the ferrule 20. Since the diameter of the split sleeve 25 can be enlarged due to elastic deformation such that a distance between the end surfaces 25b which form the split groove 25a expands and hence, the insertion of the ferrule 20 into the split sleeve 25 is allowed.

The split sleeve 25 has the same inner diameter over the whole length in the longitudinal direction and hence, the split sleeve 25 holds the ferrule 20 having the same outer diameter as the split sleeve 25 and facing the split sleeve 25 in an opposed manner coaxially. Further, the split sleeve 25 holds the ferrule 20 with a holding strength of a degree which allows sliding of the ferrule 20 in a state where the ferrule 20 is inserted into the split sleeve 25. A portion of the ferrule 20 which is inserted into the split sleeve 25 has an approximately whole surface thereof brought into contact with an inner peripheral surface 25c of the split sleeve 25.

In this manner, the connection portion 5 holds both connecting-side end portions of the optical fibers which are inserted into the inside of the split sleeve 25 respectively in a state where the diameter of the split sleeve 25 is enlarged due to the elastic deformation of the split sleeve 25.

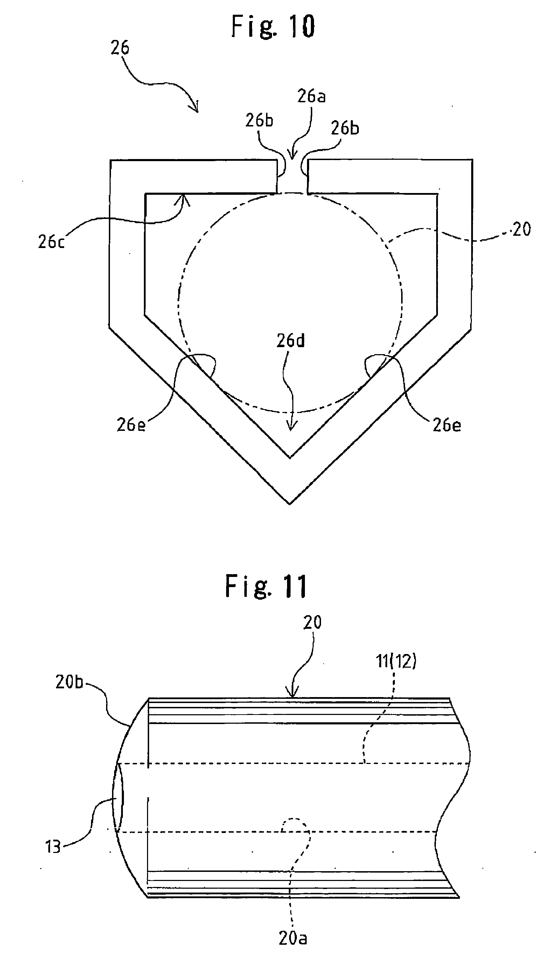

Provided that the connection portion 5 can hold both connecting-side end portions of the optical fibers coaxially and in an axially slidable manner, a shape of the holding member which constitutes the connection portion 5 is not limited. The holding member which constitutes the connection portion 5 may be a V-shaped split sleeve 26 having a V-shaped groove 26d as shown in Fig. 9 and Fig. 10, for example.

The V-shaped split sleeve 26 has, in the same manner as the split sleeve 25, a split groove 26a extending in the axial direction which is formed of a pair of end surfaces 26b which face each other in an opposed manner. The V-shaped split sleeve 26 holds, by an inner peripheral surface 26c including a pair of slanted surfaces 26e forming the V-shaped groove 26d, both connecting-side end portions of the optical fibers coaxially and in an axially slidable manner in a state where the ferrule 20 is inserted into the V-shaped split sleeve 26 from opening portions formed on both ends of the V-shaped split sleeve 26.

As shown in Fig. 11, shapes of fiber end surfaces 13 of the connecting-side end portions of the optical fibers which are connected to each other have a spherical shape respectively. To be more specific, the fiber end surface 13 of the connecting-side end portion of the optical fiber is positioned on a common plane with the connecting-side end surface 20b of the ferrule 20 as described above. Accordingly, in this embodiment, the fiber end surface 13 has a spherical shape together with the connecting-side end surface 20b of the ferrule 20. That is, a common spherical surface is formed of the fiber end surface 13 and the connecting-side end surface 20b of the ferrule 20.

Here, the spherical shape used for defining the shape of the fiber end surface 13 is a round shape of a convex curved surface which forms a part of a spherical surface, for example, is not always required to follow a spherical surface, and may be a shape which approximates a spherical shape. The spherical shape which is formed of the fiber end surface 13 and the connecting-side end surface 20b of the ferrule 20 is formed by polishing the connecting-side end surface 20b of the ferrule 20 together with the connecting-side end portion of the optical fiber in a state where the ferrule 20 allows the insertion of the connecting-side end portion of the optical fiber in the hole portion 20a, for example.

Further, according to the multiplexing device 1 of this embodiment, each optical fiber part 4R, 4G, 4B is constituted of a single-mode optical fiber which transmits a laser beam incident thereinto from each light source module 6, 7, 8 in a single mode. The light-source-side optical fiber 11 which constitutes each optical fiber part 4R, 4G, 4B has at least a length which enables the elimination of multimode components from a laser beam incident from each light source module 6, 7, 8 by allowing a laser beam incident from each light source module 6, 7, 8 to pass through the light-source-side optical fiber 11.

The laser beam which is incident on the light-source-side optical fiber 11 from each light source module 6, 7, 8 is incident on each light source module 6, 7, 8 in such a manner that the laser beam is dispersed into multimode components which are components of a plurality of modes. On the other hand, the laser beam having multimode components which is incident on the light-source-side optical fiber 11 passes through the core, the cladding and the like which constitute the light-source-side optical fiber 11 in the course of propagating in the light-source-side optical fiber 11 and exits from the light-source-side optical fiber 11. This phenomenon is brought about by the nature of the multimode components that, originally, the multimode components which are incident on the single mode optical fiber which transmits the laser beam in a single mode cannot propagate in the core for a long distance due to the relationship between the multimode components and a diameter of the core or the like. Accordingly, the longer the distance that the laser beam propagates in the light-source-side optical fiber 11 which is constituted of the single mode optical fiber, the larger an amount of multimode components which are eliminated from the laser beam incident on the light-source-side optical fiber 11 from each light source module 6, 7, 8.

In view of the above, with respect to the light-source-side optical fiber 11 which constitutes the green optical fiber part 4G, as indicated by symbol d2, a length sufficient to remove multimode components from the laser beam incident from the light source module 7 is assured as a length of the light-source-side optical fiber 11. That is, the length of the light-source-side optical fiber 11 is set to a length which allows the laser beam irradiated through the light-source-side optical fiber 11 to contain only single-mode components. To be more specific, it is preferable to assure a length of 100mm or more, for example, as the length of the light-source-side optical fiber 11 although the length may vary depending on the constitution or the like of the optical fiber.

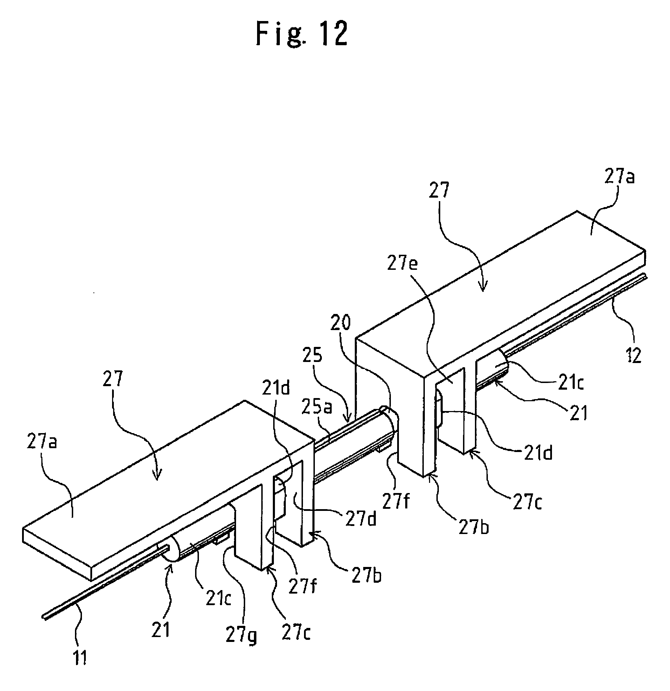

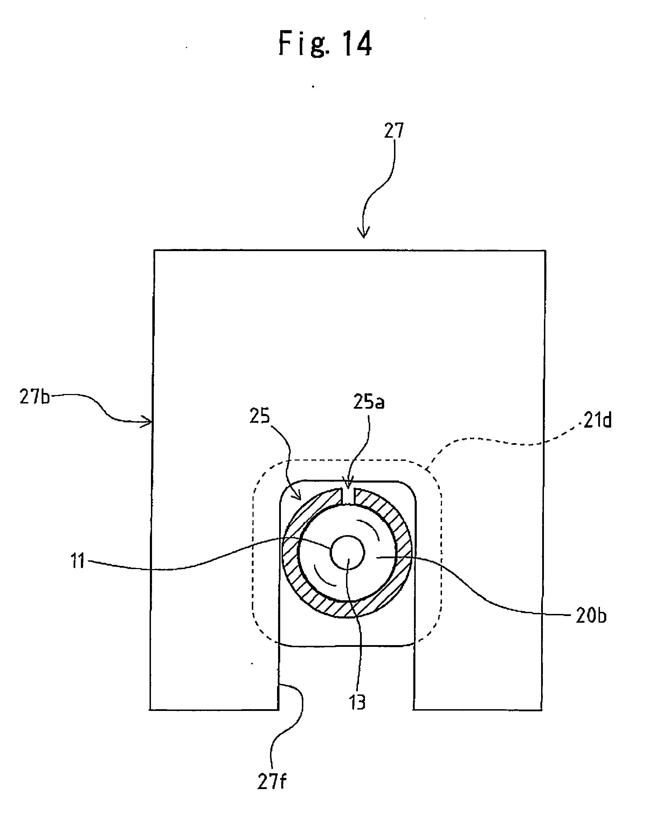

One example of method of adjusting the inter-end-surface distance d1 between connecting-side end portions of both optical fibers is explained in conjunction with Fig. 12 to Fig. 14. As shown in Fig. 12 to Fig. 14, in the method of adjusting the inter-end-surface distance d1 of this example, a pair of adjustment jigs 27 is used. The adjustment jigs 27 are engaged with the flange portions 21d of the support sleeves 21 which support the ferrules 20 and apply a force along the axial direction to the connecting-side end portion of the optical fiber so as to change the inter-end-surface distance d1. The adjustment jigs 27 apply a force to the connecting-side end portions of the optical fibers by way of the flange portions 21d in the direction along which the connecting-side end portions of the optical fibers are separated from each other so as to increase the inter-end-surface distance d1 or in the direction along which the connecting-side end portions of the optical fibers approach to each other so as to decrease the inter-end-surface distance d1.

The adjustment jig 27 includes a rectangular plate-shaped base portion 27a, and a pulling lug portion 27b and a pushing lug portion 27c which constitute a pair of plate-shaped portions projecting in the approximately vertical direction from a plate surface on one side of the base portion 27a. The pulling lug portion 27b and the pushing lug portion 27c are formed on one longitudinal end portion of the base portion 27a approximately parallel to each other at a predetermined distance therebetween. The distance between the pulling lug portion 27b and the pushing lug portion 27c is set to a size of a degree which allows the pulling lug portion 27b and the pushing lug portion 27c to sandwich at least the flange portion 21d of the support sleeve 21 from both sides in the axial direction.

The adjustment jigs 27 use surfaces of the pulling lug portions 27b on a side where the pulling lug portions 27b face the pushing lug portions 27c in an opposed manner as separation action surfaces 27d for applying a force in the direction that the connecting-side end portions of the optical fibers are separated from each other to the connecting-side end portion of the optical fiber by way of the flange portion 21d so as to increase the inter-end-surface distance d1. The adjustment jigs 27 apply a force, which is in the direction that the connecting-side end portions of the optical fibers are separated from each other so as to increase the inter-end-surface distance d1, in a state where the separation action surfaces 27d are brought into contact with end surfaces 21e of the flange portions 21d which support the ferrules 20.

The pulling lug portion 27b has a recessed portion 27f for bringing the separation action surface 27d into contact with the end surface 21e of the flange portion 21d in a wide range. The recessed portion 27f is a cutaway portion formed on an end portion of the pulling lug portion 27b on a side where the pulling lug portion 27b projects from the base portion 27a. The recessed portion 27f is formed with a size which allows at least the ferrule 20 which is provided in a projecting manner from the end surface 21e of the flange portion 21d to be fitted therein, and also is formed with a size which ensures a contact surface of the separation action surface 27d with the end surface 21e of the flange portion 21d.

The adjustment jigs 27 use surfaces of the pushing lug portions 27c on a side where the pushing lug portions 27c face the separation action surfaces 27d in an opposed manner as approaching action surfaces 27e for applying a force in the direction that the connecting-side end portions of the optical fibers approach to each other to the connecting-side end portion of the optical fiber by way of the flange portion 21d so as to decrease the inter-end-surface distance d1. The adjustment jigs 27 apply a force which makes the connecting-side end portions of the optical fibers approach to each other so as to decrease the inter-end-surface distance d1 in a state where the approaching action surfaces 27e are brought into contact with end surfaces 21 f of the flange portions 21d on a base portion 21c side.

The pushing lug portion 27c has a recessed portion 27g for bringing the approaching action surface 27e into contact with the end surface 21f of the flange portion 21d in a wide range. The recessed portion 27g is a cutaway portion formed on an end portion of the pushing lug portion 27c on a side where the pushing lug portion 27c projects from the base portion 27a. The recessed portion 27g is formed with a size which allows at least the base portion 21c of the support sleeve 21 which is provided in a projecting manner from the end surface 21f of the flange portion 21d to be fitted therein, and is also formed so as to ensure a contact surface of the approaching action surface 27e with the end surface 21 f of the flange portion 21d.

The pair of adjustment jigs 27, in adjusting the inter-end-surface distance d1, is set such that the ferrules 20 are positioned in the inside of the recessed portions 27f of the pulling lug portions 27b and the base portions 21c of the support sleeves 21 are positioned in the inside of the recessed portions 27g of the pushing lug portions 27c so that each flange portion 21d is sandwiched between the pulling lug portion 27b and the pushing lug portion 27c.

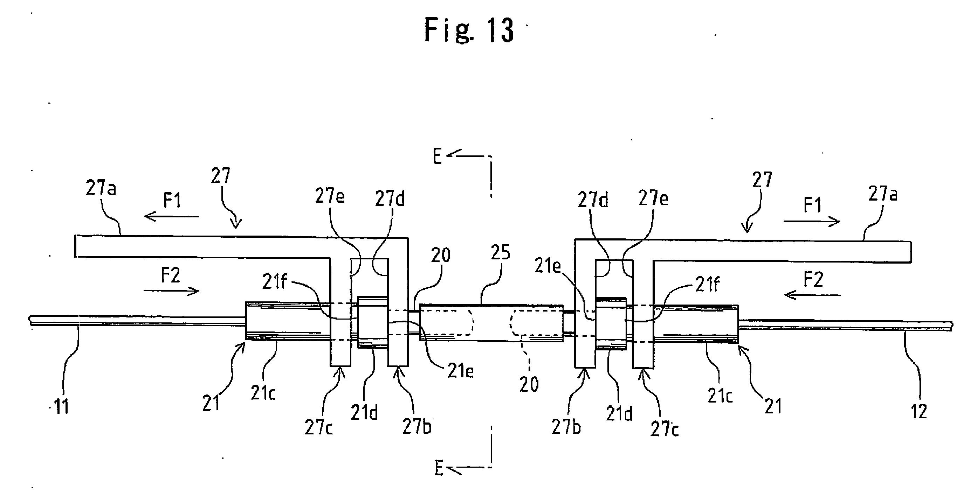

To increase the inter-end-surface distance d1, the pair of adjustment jigs 27 is pulled in the direction that the adjustment jigs 27 are separated from each other along the axial direction of the connecting-side end portions of the optical fibers (see Fig. 13, an arrow F1). Due to such an operation, the pulling lug portions 27b of the adjustment jigs 27 are engaged with the flange portions 21d so that the connecting-side end portions of the optical fibers which are connected to each other are moved relative to each other by way of the ferrules 20 which are slidable relative to the split sleeve 25 as described above so as to increase the inter-end-surface distance d1.

On the other hand, to decrease the inter-end-surface distance d1, the pair of adjustment jigs 27 is pushed in the direction that the adjustment jigs 27 are made to approach to each other along the axial direction of the connecting-side end portions of the optical fibers (see Fig. 13, an arrow F2). Due to such an operation, the pushing lug portions 27c of the adjustment jigs 27 are engaged with the flange portions 21d so that the connecting-side end portions of the optical fibers which are connected to each other are moved relative to each other by way of the ferrules 20 which are slidable relative to the split sleeve 25 as described above so as to decrease the inter-end-surface distance d1.

In the multiplexing part 3 having the above-mentioned structure, in carrying out the adjustment of a light quantity of light irradiated from each light source module 6, 7, 8, for example; the adjustment jigs 27 are moved using a desired tool or manually so as to adjust the inter-end-surface distance d1.

To be more specific, as shown in Fig. 1, predetermined light quantities of laser beams Lr, Lg, Lb are outputted from the respective light source modules 6, 7, 8 and, while measuring a light quantity of the laser beam L1 outputted from the transmission cable S1 after multiplexing, the inter-end-surface distance d1 is adjusted such that the laser beam L1 after multiplexing becomes a desired output. The method of adjusting the inter-end-surface distance d1 is not limited to the method which uses the adjustment jigs 27.

After the inter-end-surface distance d1 is adjusted, the ferrules 20 which cover the connecting-side end portions of the optical fibers are fixed to the split sleeves 25. The ferrules 20 are fixed to the split sleeves 25 by an adhesive agent 28 which is applied to stepped portions between outer peripheral surfaces of the ferrules 20 and inner peripheral surfaces 25c of the split sleeves 25 as shown in Fig. 2, for example. Due to such a fixing operation, the adjustment of the inter-end-surface distance d1 between the connecting-side end portions of the optical fibers is completed.

Due to such adjustment of the inter-end-surface distance d1 between the connecting-side end portions of the optical fibers, light quantity adjustment of R, G, B is performed such that a power ratio among the laser beams of respective colors irradiated from the respective light source modules 6, 7, 8 in the optical source part 2 becomes a predetermined value. The light quantity adjustment is performed such that the output light from the multiplexing part 3 becomes a desired light quantity while monitoring the light quantity of the output light using a light power meter or the like. As a mode of adjustment of light quantities, for example, the light adjustment is performed such that when the outputs of laser beams irradiated from the light source modules 6, 7, 8 of respective colors are 4000µW for R, 2000µW for G and 2000µW for B, the white balance of the output from the multiplexing part 3 becomes such that R: 90µW, G: 100µW and B: 45µW.

### [Second embodiment of multiplexing device]

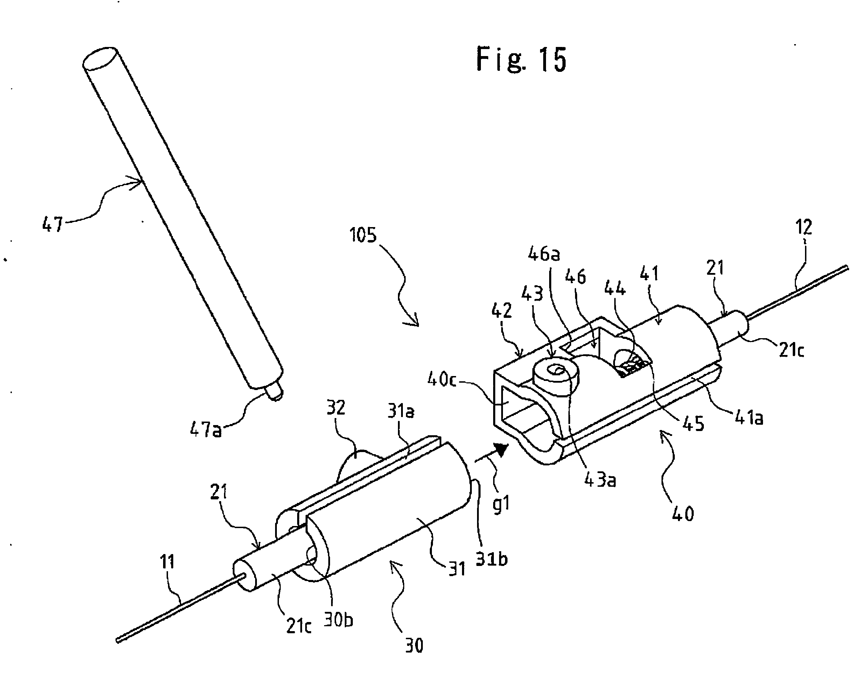

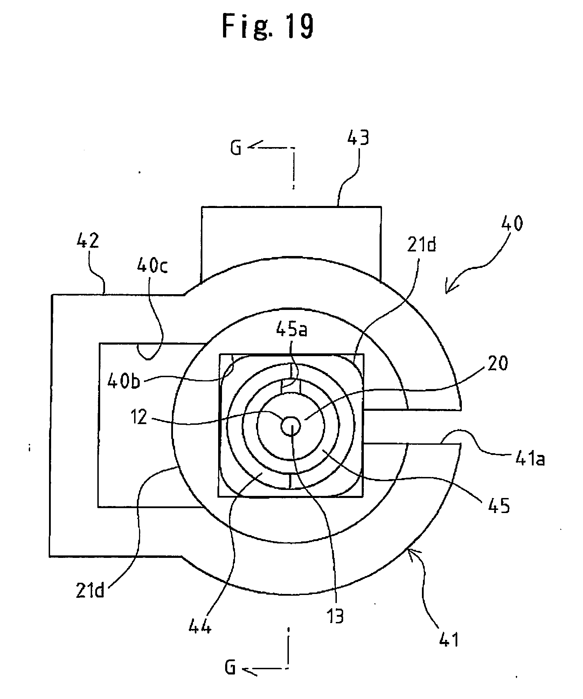

The multiplexing device of this embodiment differs from the first embodiment with respect to the constitution of a connection portion 105. Accordingly, parts of the multiplexing device of this embodiment which are common with the parts of the multiplexing device of the first embodiment are given same symbols. The constitution of the connection portion 105 according to this embodiment is explained in conjunction with Fig. 15 to Fig. 25.

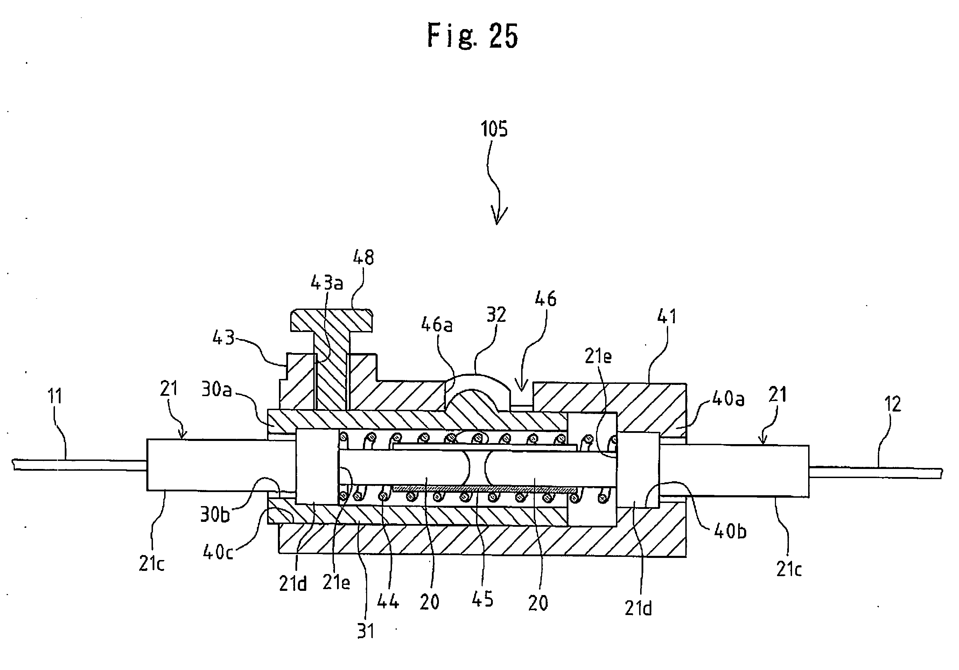

As shown in Fig. 15, the connection portion 105 according to this embodiment includes; a first connection body 30 which constitutes a first member and is detachably mounted on a connecting-side other end portion of a light-source-side optical fiber 11; and a second connection body 40 which constitutes a second member and is detachably mounted on a connecting-side other end portion of a multiplexing-side optical fiber 12. The first connection body 30 and the second connection body 40 are detachably connected to each other. Both the first connection body 30 and the second connection body 40 are mounted on connecting-side end portions of the optical fibers each of which is provided with a ferrule 20 and a support sleeve 21 (see Fig. 25).

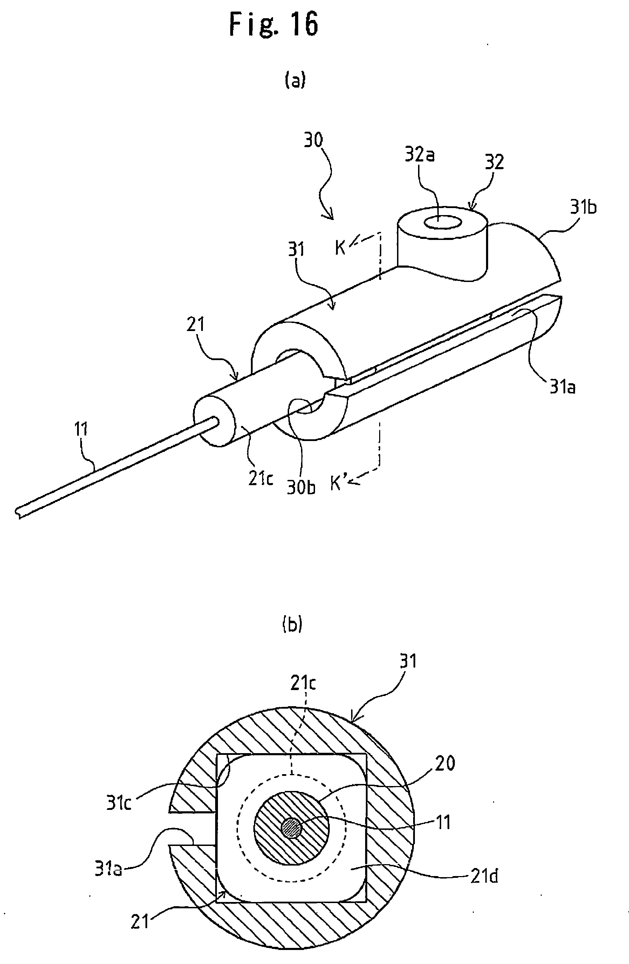

Firstly, the first connection body 30 is explained. As shown in Fig. 16A, Fig. 16B and Fig. 25, the first connection body 30 includes a base portion 31 which is formed into an approximately cylindrical shape, and a cylindrical fitting projection 32 which is formed on the outer peripheral surface of the base portion 31. The base portion 31 has a slit 31 a which is formed in the axial direction. The cylindrical fitting projection 32 is formed on an outer peripheral surface of the base portion 31 such that the center axis direction of the fitting projection 32 agrees with the radial direction of the base portion 31.

The slit 31a is a gap which is provided for allowing the insertion of the light-source-side optical fiber 11 into the base portion 31 therethrough at the time of mounting the ferrule 20 in the inside of the first connection body 30. That is, in mounting the ferrule 20 in the inside of the first connection body 30, as shown in Fig. 16A, firstly, the light-source-side optical fiber 11 is inserted into the inside of the first connection body 30 along the slit 31a. Then, the support sleeve 21 is inserted into the base portion 31 from a second-connection-body side end portion 31b and is exposed from an opening portion 30b. The internal structure of the first connection body 30 in cross section taken along a line K-K' has, as shown in Fig. 16B, an inner peripheral surface 31c of approximately rectangular cross section, wherein a flange portion 21d is also stored in the inside of the first connection body 30. Further, the inner peripheral surface 31c has the same shape as the flange portion 21d as viewed in cross section. Accordingly, the flange portion 21d is slidable in the axial direction in the inside of the base portion 31 but the rotation of the flange portion 21d about the axis is restricted.

In this manner, the first connection body 30 is mounted on the light-source-side optical fiber 11 in a state where the first connection body 30 includes the flange portion 21d of the support sleeve 21 and a portion of the ferrule 20 mounted on the light-source-side optical fiber 11 in the inside thereof, and the base portion 21c of the support sleeve 21 projects from the opening portion 30b on a side opposite to a connecting-side for the multiplexing-side optical fiber 12 (hereinafter simply referred to as "connecting-side").

The first connection body 30 holds the support sleeve 21 in the inside thereof in a state where the flange portion 21d of the support sleeve 21 is brought into contact with a bottom wall portion 30a on a side where the base portion 21c of the support sleeve 21 projects from the inside. The first connection body 30 is mounted on the light-source-side optical fiber 11 in a relatively movable manner in the axial direction. With respect to the relative axial movement between the first connection body 30 and the light-source-side optical fiber 11, an inner peripheral surface of the base portion 31 of the first connection body 30 and an outer peripheral surface of the flange portion 21 d of the support sleeve 21 become sliding surfaces.

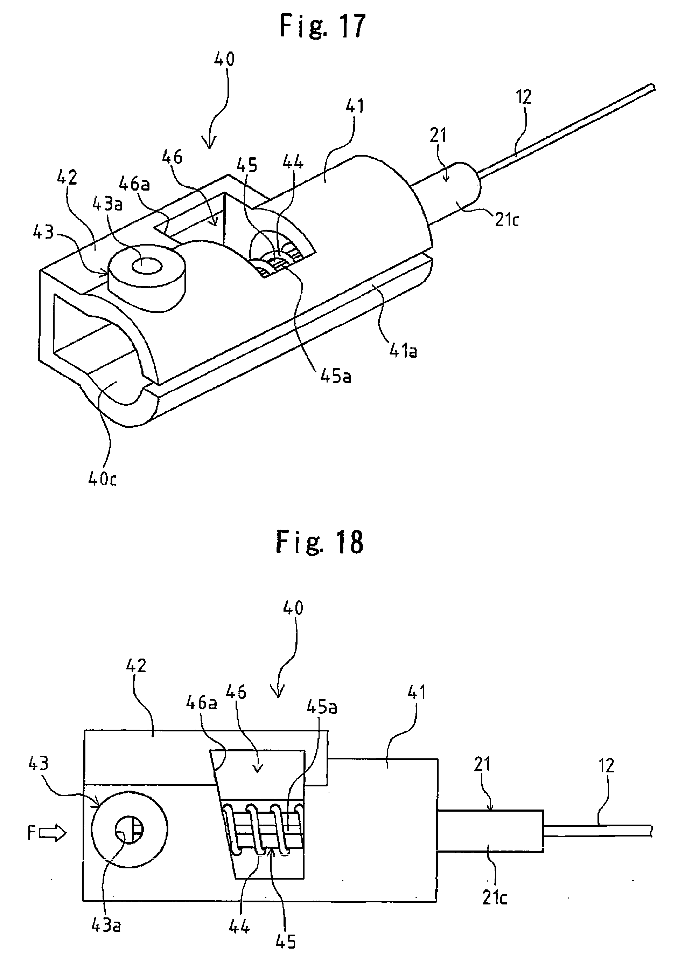

Next, the second connection body 40 is explained. As shown in Fig. 17 to Fig. 20, the second connection body 40 is formed in an approximately cylindrical shape, is one size larger than the first connection body 30, and holds the first connection body 30 therein in an inserted state. The second connection body 40 includes a base portion 41 which is formed in an approximately cylindrical shape, a box portion 42 which is formed by projecting a circumferential part of the base portion 41 in an approximately rectangular shape as viewed in the axial direction, and a boss portion 43 which is formed on the base portion 41 in the radial direction and in which a threaded hole 43a is formed.

The base portion 41 has an axially extending slit 41a. The box portion 42 is provided for projecting an inner space of the base portion 41 formed into an approximately cylindrical shape in the radially outward direction of the base portion 41 as viewed in the axial direction in an approximately rectangular shape. Due to the combination of the base portion 41 and the box portion 42, a space which is substantially constituted of a front rectangular space and a rear circular space is formed as viewed in the axial direction. The boss portion 43 is formed so as to project in the radial direction approximately 90 degrees displaced from the direction along which the box portion 42 projects with respect to the circumferential direction of the base portion 41. The boss portion 43 is provided to an end portion of the second connection body 40 on a connecting-side for the light-source-side optical fiber 11 (simply referred to as "connecting-side" hereinafter).

The second connection body 40 is mounted on the multiplexing-side optical fiber 12 in a state where the second connection body 40 includes a portion of the ferrule 20 mounted on the multiplexing-side optical fiber 12 in the inside thereof, and the base portion 21c of the support sleeve 21 projects from the opening portion 40b on a side opposite to a connecting-side. The second connection body 40 holds the support sleeve 21 in a state where the flange portion 21d of the support sleeve 21 is fitted into the bottom wall portion 40a on a side opposite to the connecting-side. The bottom wall portion 40a has an approximately rectangular opening portion 40b into which the flange portion 21d which has a chamfered and approximately rectangular shape as viewed in the axial direction is fitted. The bottom wall portion 40a supports the multiplexing-side optical fiber 12 in a state where the flange portion 21d is fitted into the opening portion 40b. Due to such a constitution, the support sleeve 21 which is mounted on the multiplexing-side optical fiber 12 is supported in a relatively non-rotatable manner with respect to the second connection body 40.

The first connection body 30 is inserted into the second connection body 40 from an opening portion 40c on the connecting-side. The opening portion 40c has a shape corresponding to a shape which includes the base portion 31 and the fitting projection 32 of the first connection body 30 as viewed in the axial direction. That is, the base portion 31 of the first connection body 30 corresponds to a cylindrical space portion defined by an inner peripheral surface of the base portion 41 of the second connection body 40, and the fitting projection 32 of the first connection body 30 corresponds to a rectangular parallelepiped space portion defined by an inner peripheral surface of the box portion 42 of the second connection body 40.

Accordingly, the opening portion 40c of the second connection body 40 on the connecting-side has a shape which is substantially constituted of a front rectangular shape and a rear circular shape corresponding to the shape of the base portion 31 and the shape of the fitting projection 32 of the first connection body 30 as viewed in the axial direction. Since the second connection body 40 has the slit 41a, the first connection body 30 is inserted into the second connection body 40 from the opening portion 40c side in a state where the second connection body 40 is in a diameter-enlarged state due to elastic deformation. Accordingly, in a state where the first connection body 30 is inserted into the second connection body 40, the first connection body 30 receives a slight gripping force due to elasticity of the second connection body 40 to an extent that the first connection body 30 is movable relative to the second connection body 40 in the axial direction. In the same manner as the slit 31a, the slit 41a is also a gap provided for allowing the insertion of the multiplexing-side optical fiber 12 into the second connection body 40 at the time of mounting the ferrule 20 in the inside of the second connection body 40. The mounting of the ferrule 20 in the inside of the second connection body 40 is substantially equal to the mounting of the ferrule 20 in the inside of the first connection body 30.

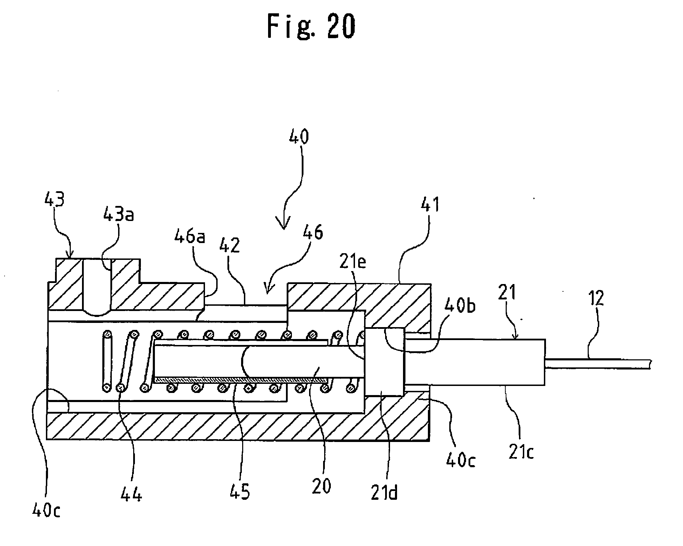

Further, in the inside of the second connection body 40, a compression spring 44 is fitted on the ferrule 20 mounted on the multiplexing-side optical fiber 12 (see Fig. 20). The compression spring 44 is supported on the ferrule 20 in the inside of the second connection body 40 by way of a cylindrical support sleeve 45. That is, the support sleeve 45 is fitted on the ferrule 20, and the compression spring 44 is fitted on the support sleeve 45. The support sleeve 45 has an axially extending slit groove 45a and is supported on the ferrule 20 in a diameter-enlarged state due to elastic deformation. The compression spring 44 has one end side thereof supported on an end surface 21e of the flange portion 21d which is held by the bottom wall portion 40a of the second connection body 40.

The second connection body 40 also has an engaging opening portion 46 which is formed in an extending manner between and over the base portion 41 and the box portion 42. The engaging opening portion 46 is an opening portion provided for allowing a fitting projection 32 of the first connection body 30 in a state where the first connection body 30 is inserted into the second connection body 40 to be engaged with the second connection body 40. The engaging opening portion 46 is formed at an approximately center position of the base portion 41 in the axial direction.

The connection structure between the first connection body 30 and the second connection body 40 is explained. In connecting the first connection body 30 to the second connection body 40, firstly, as shown in Fig. 15, as indicated by an arrow g1, the first connection body 30 is inserted into the inside of the second connection body 40 from the opening portion 40c of the second connection body 40. Here, the first connection body 30 is inserted at an angle that the fitting projection 32 is positioned corresponding to the box portion 42 of the second connection body 40 with respect to the rotational direction about the axis.

When the insertion of the first connection body 30 which is inserted into the second connection body 40 from the opening portion 40c becomes a certain amount, the fitting projection 32 reaches the engaging opening portion 46. The engaging opening portion 46 allows the movement of the fitting projection 32 which is brought about by the rotation of the first connection body 30 relative to the second connection body 40. That is, by exposing the fitting projection 32 to the outside of the second connection body 40 by way of the engaging opening portion 46, the second connection body 40 allows the rotation of the first connection body 30 and, at the same time, allows the first connection body 30 to be engaged with the second connection body 40 by way of the fitting projection 32.

Further, by inserting the first connection body 30 into the second connection body 40, the ferrule 20 which covers the light-source-side optical fiber 11 on which the first connection body 30 is mounted is inserted into the compression spring 44 and the support sleeve 45 which are supported on the ferrule 20 which covers the multiplexing-side optical fiber 12 in the inside of the second connection body 40 (see Fig. 25). Here, in a state where the fitting projection 32 is engaged with the engaging opening portion 46 as described above, the compression spring 44 is compressed in a state where the other end side of the compression spring 44 is supported on the end surface 21e of the flange portion 21d of the support sleeve 21 mounted on the light-source-side optical fiber 11.

Due to such a constitution, the compression spring 44 presses and biases the first connection body 30 inserted into the second connection body 40 to the second connection body 40 in the direction that the first connection body 30 is removed from the second connection body 40. The first connection body 30 which receives a biasing force generated by the compression spring 44 is supported on the second connection body 40 by allowing the fitting projection 32 to be engaged with the engaging opening portion 46. To be more specific, the first connection body 30 is supported on the second connection body 40 in a state where an outer peripheral surface of the fitting projection 32 is brought into contact with a projection contact surface 46a which constitutes a connecting-side side surface forming the engaging opening portion 46.

The projection contact surface 46a is formed, as viewed in a plan view, as a slanted surface which is inclined with respect to a surface perpendicular to the center axis direction of the second connection body 40. Accordingly, along with the rotation of the first connection body 30 relative to the second connection body 40, the fitting projection 32 which is brought into pressure contact with the projection contact surface 46a due to a biasing force generated by the compression spring 44 is moved along the inclination of the projection contact surface 46a so that the first connection body 30 is moved in the center axis direction relative to the second connection body 40. Due to such movement of the first connection body 30 in the center axis direction along with the rotation of the first connection body 30 relative to the second connection body 40, the inter-end-surface distance d1 between the light-source-side optical fiber 11 and the multiplexing-side optical fiber 12 can be adjusted.

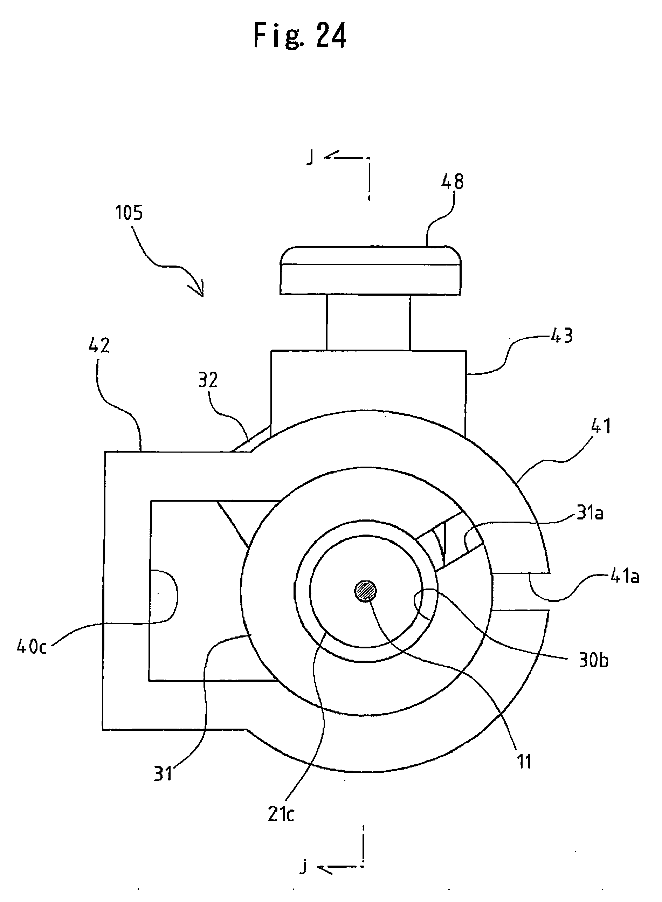

To be more specific, as viewed in the axial direction shown in Fig. 24, due to the rotation of the first connection body 30 in the clockwise direction relative to the second connection body 40, the first connection body 30 is moved in the direction that the inter-end-surface distance d1 is decreased. Also as viewed in the axial direction as shown in Fig. 24, due to the rotation of the first connection body 30 in the counterclockwise direction relative to the second connection body 40, the first connection body 30 is moved in the direction that the inter-end-surface distance d1 between the light-source-side optical fiber 11 and the multiplexing-side optical fiber 12 is increased.

Such rotation of the first connection body 30 relative to the second connection body 40 for adjusting the inter-end-surface distance d1 is brought using a manipulation rod 47 (see Fig. 15). The manipulation rod 46 has a fitting projection 47a on one end portion thereof, and the manipulation rod 46 is fitted into a fitting hole 32a formed in the fitting projection 32 of the first connection body 30.

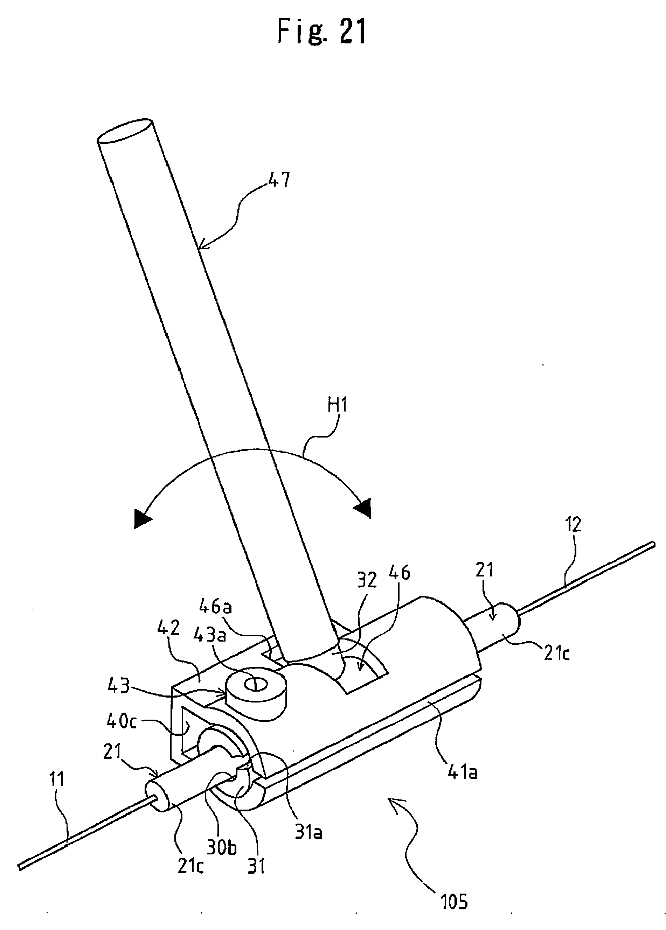

As shown in Fig. 21, in a state where the fitting projection 32 of the first connection body 30 is inserted into the second connection body 40 and is engaged with the engaging opening portion 46, the fitting projection 47a of the manipulation rod 47 is inserted into the fitting hole 32a formed in the fitting projection 32. Then, by rotatably operating the manipulation rod 47 which is inserted in the fitting projecting 32about the center axis of the first connection body 30, the first connection body 30 is rotated relative to the second connection body 40. In such an operation, the second connection body 40 is supported by a predetermined method so as to prevent the second connection body 40 from being rotated together with the first connection body 30.

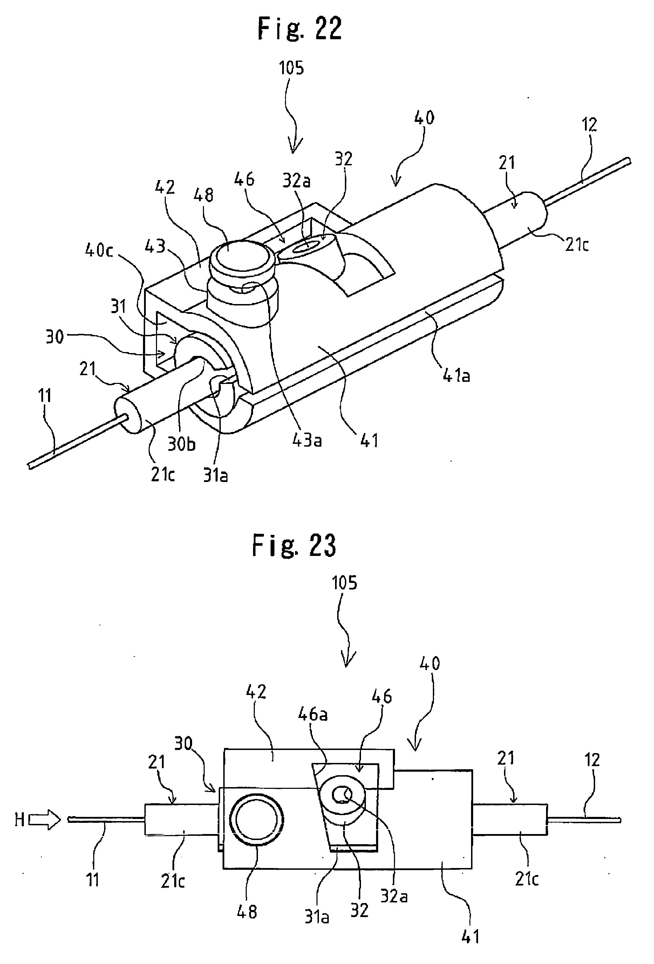

After the inter-end-surface distance d1 is adjusted by the rotational manipulation of the first connection body 30 using the manipulation rod 47, the rotation of the first connection body 30 relative to the second connection body 40 is restricted by the fastening screw 48. As shown in Fig. 22 to Fig. 25, the fastening screw 48 is threaded into a threaded hole 43a formed in a boss portion 43 formed on the second connection body 40 from the outside of the second connection body 40 so that the first connection body 30 is pressed to the second connection body 40 from an outer peripheral surface side by a fastening force. Since the first connection body 30 is pressed to the second connection body 40 by the fastening screw 48, the rotation of the first connection body 30 relative to the second connection body 40 is restricted so that the position of the first connection body 30 in the axial direction relative to the second connection body 40 is fixed. With such a fixing operation, the adjustment of the inter-end-surface distance d1 between the connecting-side end portions of the optical fibers is finished. Here, the adjustment of the inter-end-surface distance d1 is performed such that, in the same manner as the first embodiment, predetermined light quantities of laser beams Lr, Lg, Lb are outputted from the respective light source modules 6, 7, 8 and, while measuring a light quantity of the laser beam L1 outputted from the transmission cable 51 using a power meter, the laser beam L1 after multiplexing becomes a desired output.

To adjust the inter-end-surface distance d1 again, in a state where the fastening screw 48 is loosened or is removed, the first connection body 30 is rotated relative to the second connection body 40 using the manipulation rod 47. On the other hand, To release the connection between the light-source-side optical fiber 11 and the multiplexing-side optical fiber 12 which are connected with each other by the connection portion 105, the fitting projection 32 is aligned with the box portion 42 by rotating the first connection body 30 relative to the second connection body 40, and the first connection body 30 is pulled out from the second connection body 40.

As described above, in the connection portion 105, the light-source-side optical fiber 11 and the multiplexing-side optical fiber 12 are connected to each other by mounting the first connection body 30 in the second connection body 40, and the connection between the light-source-side optical fiber 11 and the multiplexing-side optical fiber 12 is released by removing the first connection body 30 from the second connection body 40. The first connection body 30 and the second connection body 40 which constitute the connection portion 105 of this embodiment are assembled to each other or disassembled from each other due to the combination of the insertion of the first connection body 30 into the second connection body 40 or the pulling out of the first connection body 30 from the second connection body 40 and the relative rotation between the first connection body 30 and the second connection body 40. By adjusting the relative positional relationship between the first connection body 30 and the second connection body 40 in the center axis direction, the adjustment of the inter-end-surface distance d1 between the connecting-side end portions of the optical fibers is performed.

In this embodiment, the first connection body 30 is mounted on the light-source-side optical fiber 11 and the second connection body 40 is mounted on the multiplexing-side optical fiber 12. However, mounting of the connection bodies on the optical fibers may be exchanged. That is, the first member mounted on the light-source-side optical fiber 11 may be the second connection body 40, and the second member mounted on the multiplexing-side optical fiber 12 may be the first connection body 30.

In the above-mentioned embodiment, the connecting-side end portion of the light-source-side optical fiber 11 and the connecting-side end portion of the multiplexing-side optical fiber 12 are covered with the ferrule 20 respectively. However, the adjustment of the inter-end-surface distance d1 can be performed also in a case where the connecting-side end portion of the light-source-side optical fiber 11 and the connecting-side end portion of the multiplexing-side optical fiber 12 are not covered with the ferrule 20. Further, in the above-mentioned embodiment, the multiplexing device 1 is applied to the RSD 50. However, the multiplexing device according to the present invention is also applicable to various kinds of image display devices besides RSD.

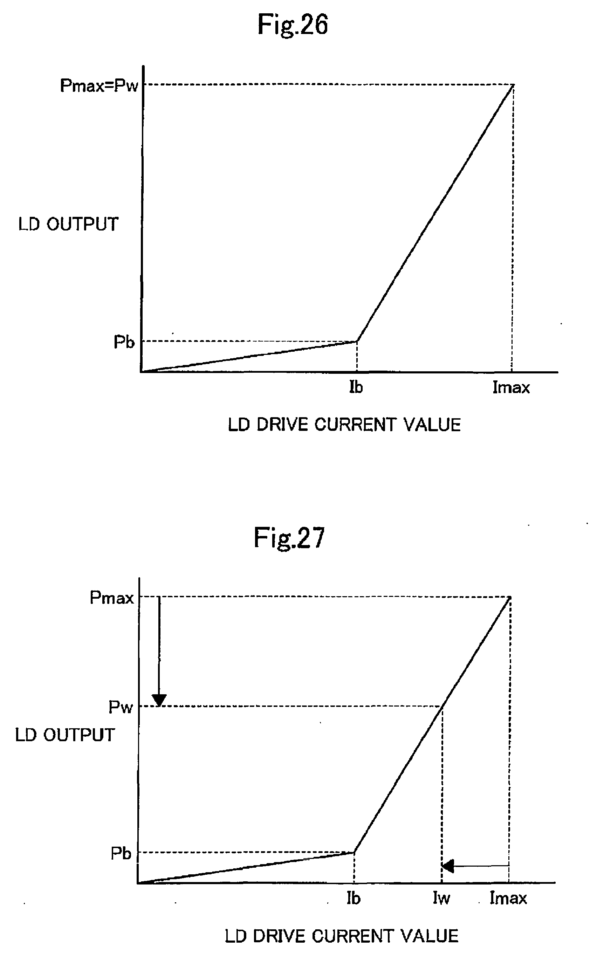

As has been explained heretofore, following advantageous effects can be acquired by the multiplexing device 1 according to this embodiment.
(1) The multiplexing device 1 of this embodiment includes the light source part 2 which has three light source modules 6, 7, 8 which irradiate laser beams having different wavelengths, the multiplexing part 3 which multiplexes the laser beams irradiated from the respective light source modules 6, 7, 8, three optical fiber parts 4R, 4G, 4B, each optical fiber part including the light-source-side optical fiber 11 which has one end portion thereof connected to the light source modules 6, 7, 8, and the multiplexing-side optical fiber 12 which is provided corresponding to the light-source-side optical fiber 11 and has one end portion thereof connected to the multiplexing part 3, and is provided corresponding to each light source modules 6, 7, 8, and the plurality of connecting parts 5R, 5G, 5B which are provided corresponding to the optical fiber parts 4R, 4G, 4B respectively, each connecting part connecting the light-source-side optical fiber 11 and the multiplexing-side optical fiber 12 in a state where the connecting-side end portion of the light-source-side optical fiber 11 and the connecting-side end portion of the multiplexing-side optical fiber 12 face each other. The connecting parts 5R, 5G, 5B are configured to change a distance between the connecting-side end portion of the light-source-side optical fiber 11 and the connecting-side end portion of the multiplexing-side optical fiber 12 which face each other. Accordingly, it is possible to adjust light quantities of lights from the respective light sources without damaging a contrast of an image while suppressing the large-sizing of the device and the pushing up of cost.
   The advantage acquired by the multiplexing device 1 of this embodiment that the contrast of the image is not damaged is further explained in conjunction with Fig. 26 and Fig. 27. Fig. 26 and Fig. 27 are graphs showing a relationship between a drive current value and an output of a semiconductor laser (LD) which constitutes each light source modules 6, 7, 8.
   As shown in Fig. 26 and Fig. 27, as an output characteristic which changes along with a change of a drive current value, the semiconductor laser exhibits an output characteristic where the laser output does not become zero and maintains a certain amount of light even when the drive current value is a threshold current value Ib which corresponds to a lower limit output Pb of a modulation width of the laser. This result is, in case of the semiconductor laser, brought about from a phenomenon that a light emitting component of an LED (light emitting diode) is present even in a state where the drive current value is the threshold current value Ib. Then, the output of the semiconductor laser is increased within a range from a point where the output value is the threshold current value Ib to a point where the drive current value becomes a current value Imax which corresponds to an upper-limit output Pmax of the modulation width of the laser from the threshold current value Ib.
   Since the semiconductor laser has such an output characteristic, as shown in Fig. 27, when the output Pmax corresponding to the maximum light quantity is lowered to an output Pw which corresponds to a desired light quantity by lowering the drive current to a current value Iw from a current value Imax for adjusting the light quantity of the light source part 2, the contrast which is based on a ratio between an upper limit and a lower limit of a modulation width of the laser is significantly damaged. This is because, in this case, the contrast is based on a ratio of the lowered output Pw and the lower-limit output Pb of the modulation width of the laser. To the contrary, according to the multiplexing device 1 of this embodiment, as shown in Fig. 26, it is unnecessary to lower the output from Pmax for adjusting the light quantity of the light source part 2 and hence, the contrast is based on a ratio of the output Pw (=Pmax) and the lower-limit output Pb of the modulation width of the laser. Accordingly, the contrast is not damaged.
   Further, according to the multiplexing device 1 of this embodiment, the use of an external device such as an optical attenuator for adjusting a light quantity of the light source part 2 is unnecessary and hence, the multiplexing device 1 can be formed in a compact size and is also advantageous in terms of cost.
   Further, according to the multiplexing device 1 of this embodiment, after the assembling of the light source modules 6, 7, 8 of respective colors in the light source part 2 is finished, the light quantity adjustment is performed by monitoring the light quantity of the laser beam irradiated from the multiplexing part 3. Accordingly, the adjustment of light quantity can be performed by taking the coupling efficiencies of the respective light source modules 6, 7, 8 and the irregularity in the coupling efficiency in the multiplexing part 3 and hence, the multiplexing device 1 can acquire the stable light quantity.
(2) Further, according to the multiplexing device 1 of this embodiment, the connection portion 5 has the split sleeve 25 which holds the connecting-side end portion of the light-source-side optical fiber 11 and the connecting-side end portion of the multiplexing-side optical fiber 12 coaxially and in an axially slidable manner. Due to such a constitution, an operation for aligning the center axis of the light-source-side optical fiber 11 and the center axis of the multiplexing-side optical fiber 12 becomes easy.
(3) Further, according to the multiplexing device 1 of this embodiment, the connection portion 5 is formed of the cylindrical body having the axially extending split groove 25a, and holds the connecting-side end portion of the light-source-side optical fiber 11 and the connecting-side end portion of the multiplexing-side optical fiber 12 which are inserted into the cylindrical body in a diameter enlarged state due to elastic deformation. Due to such a constitution, with the simple constitution, it is possible to surely hold a state where a center axis of the light-source-side optical fiber 11 and a center axis of the multiplexing-side optical fiber 12 are aligned with each other thus further easing the operation to align the center axis of the light-source-side optical fiber 11 and the center axis of the multiplexing-side optical fiber 12 with each other.
(4) Further, according to the multiplexing device 1 of this embodiment, the connecting-side end portion of the light-source-side optical fiber 11 and the connecting-side end portion of the multiplexing-side optical fiber 12 are covered with the cylindrical ferrule 20 respectively so that the connection portion 5 connects the connecting-side end portion of the light-source-side optical fiber 11 and the connecting-side end portion of the multiplexing-side optical fiber 12 by way of the cylindrical ferrule 20 thus easing the operation to align the center axis of the light-source-side optical fiber 11 and the center axis of the multiplexing-side optical fiber 12 with each other.
(5) Further, according to the multiplexing device 1 of this embodiment, the ferrule 20 is formed into a cylindrical shape thus further easing the operation to align the center axis of the light-source-side optical fiber 11 and the center axis of the multiplexing-side optical fiber 12 with each other.
(6) Further, according to the multiplexing device 1 of this embodiment, the shapes of end surfaces of the connecting-side end portions of the light-source-side optical fiber 11 and the multiplexing-side optical fiber 12 are a spherical shape respectively. Accordingly, when the light-source-side optical fiber 11 and the multiplexing-side optical fiber 12 are physically brought into contact with each other, it is possible to decrease light which is incident on the multiplexing-side optical fiber 12 from the light-source-side optical fiber 11 and is incident on the light-source-side optical fiber 1 due to reflection on the multiplexing-side optical fiber 12. That is, the end surfaces of the optical fibers which are brought into contact with each other in an opposedly facing state have a spherical shape so that the reflection light of the light incident on the multiplexing-side optical fiber 12 from the light-source-side optical fiber 11 is dispersed whereby it is possible to decrease a quantity of light which is incident on the light-source-side optical fiber 11 from the multiplexing-side optical fiber 12 by reflection. As a result, it is possible to suppress the interference of light within the optical fiber or the fluctuation or the like of a monitor output.
(7) Further, according to the multiplexing device 1 of this embodiment, the optical fiber part 4 is constituted of a single-mode optical fiber which transmits a laser beam incident thereinto from the light source module 6, 7, 8 in a single mode. The light-source-side optical fiber 11 has at least a length which enables the elimination of multimode components from the laser beam incident from the light source module 6, 7, 8 by allowing the laser beam incident from the light source module 6, 7, 8 to pass through the light-source-side optical fiber 11. Accordingly, it is possible to prevent the fluctuation of an output caused by multimode components in the connection portion 5 where the light quantity is adjusted.
(8) Further, according to the multiplexing device 1 of this embodiment, the connection portion 5 includes: the first connection body 30 which is detachably mounted on the connecting-side end portion of the light-source-side optical fiber 11; and the second connection body 40 which is detachably mounted on the other end portion of the light-source-side optical fiber 11, and the first connection body 30 and the second connection body 40 are detachably connected to each other. Accordingly, it is possible to easily exchange each light source module 6, 7, 8 by connecting and disconnecting the first connection body 30 and the second connection body 40.
   Further, according to the constitution which includes the first connection body 30 and the second connection body 40 in the above-mentioned embodiment, the inter-end-surface distance d1 can be adjusted by rotating the first connection body 30 relative to the second connection body 40 and hence, it is possible to induce a change amount of the inter-end-surface distance d1 by a rotational angle of the first connection body 30 whereby it is possible to easily perform the fine adjustment of the inter-end-surface distance d1.
(9) Further, according to the multiplexing device 1 of this embodiment, in the connection portion 5, after the distance between the connecting-side end portion of the light-source-side optical fiber 11 and the connecting-side end portion of the multiplexing-side optical fiber 12 is adjusted, the connecting-side end portion of the light-source-side optical fiber 11 and the connecting-side end portion of the multiplexing-side optical fiber 12 are fixed to each other using the adhesive agent 28, the bolts 48 and the like and hence, it is possible to ensure the stable light quantity of the adjusted laser beam L1.

## Claims

1. A multiplexing device for an image display comprising:
a light source part which has a plurality of light source modules which are configured to irradiate optical fluxes having different wavelengths;
a multiplexing part which is configured to multiplex the optical fluxes irradiated from the respective light source modules;
a plurality of optical fiber parts, each optical fiber part including a first optical fiber which has one end portion thereof connected to the light source module and a second optical fiber which is provided corresponding to the first optical fiber and has one end portion thereof connected to the multiplexing part, the optical fiber parts being provided corresponding to the light source modules; and
a plurality of connecting parts which are provided corresponding to the optical fiber parts respectively, each connecting part connecting the first optical fiber and the second optical fiber in a state where the other end portion of the first optical fiber and the other end portion of the second optical fiber face each other in an opposed manner, wherein the connecting part is configured to change a distance between the other end portion of the first optical fiber and the other end portion of the second optical fiber which face each other.

2. The multiplexing device for an image display according to claim 1, wherein the connecting part includes a holding member which holds the other end portion of the first optical fiber and the other end portion of the second optical fiber coaxially and in an axially slidable manner.

3. The multiplexing device for an image display according to claim 1 or 2, wherein the connecting part is constituted of a cylindrical body having an axially-extending split groove, and is configured to hold the other end portion of the first optical fiber and the other end portion of the second optical fiber which are inserted in the cylindrical body respectively in a radially expanded manner due to elastic deformation thereof.

4. The multiplexing device for an image display according to any one of claims 1 to 3, wherein the other end portion of the first optical fiber and the other end portion of the second optical fiber are covered with a cylindrical ferrule respectively, and
the connecting part is configured to connect the other end portion of the first optical fiber and the other end portion of the second optical fiber by way of the cylindrical ferrule.

5. The multiplexing device for an image display according to claim 4, wherein the ferrule is formed into a circular cylindrical shape.

6. The multiplexing device for an image display according to any one of claims 1 to 5, wherein an end surface of the other end portion of the first optical fiber and an end surface of the other end portion of the second optical fiber have a spherical shape respectively.

7. The multiplexing device for an image display according to any one of claims 1 to 6, wherein the optical fiber part is constituted of a single-mode optical fiber which transmits the optical flux incident thereon from the light source module in a single mode, and
the first optical fiber has at least a sufficient length for eliminating a multimode component from the optical flux incident from the light source module therethrough by allowing the optical flux incident from the light source module to pass through the first optical fiber.

8. The multiplexing device for an image display according to any one of claims 1 to 7, wherein the connecting part includes a first member which is detachably mounted on the other end portion of the first optical fiber and a second member which is detachably mounted on the other end portion of the second optical fiber, and the first member and the second member are detachably connected to each other.

9. The multiplexing device for an image display according to any one of claims 1 to 8, wherein the connecting part is configured to fix the other end portion of the first optical fiber and the other end portion of the second optical fiber after the adjustment of the distance between the other end portion of the first optical fiber and the other end portion of the second optical fiber.

10. A retinal scanning display which comprises the multiplexing device for an image display according to any one of claims 1 to 9, and is configured to project an image on a retina of a viewer by scanning an optical flux irradiated from the multiplexing part in two dimensional directions and by projecting the scanned optical flux on the retina of an eye of the viewer.
